# EUROPÄISCHE PATENTSCHRIFT

(11) **EP 3 813 237 B1**
(45) Veröffentlichungstag und Bekanntmachung des Hinweises auf die Patenterteilung: **20.04.2022**
(21) Anmeldenummer: 20153605.9
(22) Anmeldetag: 24.01.2020
(51) Int. Cl.: H02K 9/19, H02K 21/24, H02K 3/04, H02K 16/00, H02K 3/47

(54) **SPULENMODUL FÜR EINE ELEKTRISCHE MASCHINE**
COIL MODULE FOR AN ELECTRIC MACHINE
MODULE DE BOBINE POUR UNE MACHINE ÉLECTRIQUE

(30) Priorität: 25.10.2019 EP 19205443
(43) Veröffentlichungstag der Anmeldung: 28.04.2021
(73) Patentinhaber: Vaionic Technologies GmbH, 12489 Berlin (DE)
(72) Erfinder: DOMINIK, Yannick, 12489 Berlin (DE); BERTHELMANN, Jörg, 12489 Berlin (DE); FRANZ, Georg, 12489 Berlin (DE)
(74) Vertreter: Vossius & Partner Patentanwälte Rechtsanwälte mbB

(56) Entgegenhaltungen:
- WO-A1-2012/128646
- US-A1- 2008 100 166
- US-B1- 7 795 773

## Beschreibung

Die vorliegende Erfindung betrifft ein Spulenmodul für eine elektrische Maschine.

Elektrische Maschinen unterschiedlichster Bauarten sind aus dem Stand der Technik bekannt. In der Druckschrift DE 10 2017 204 072 A1 wird eine Wicklungsart in Mäanderform für einen Elektromotor beschrieben, bei der eine hohe Dichte an elektrisch leitfähigem Material im Bereich eines von Permanentmagneten generierten Magnetfelds gewährleistet wird. Nachteilig an derartigen Aufbauten ist jedoch der verwendete Flachdraht durch seine zur Ineffizienz führenden elektromagnetischen Besonderheiten. Zudem gestaltet sich ein mehrphasiger Aufbau schwierig.

Die US 2008/0100166 A1 betrifft einen Elektromotor, der über eine Flüssigkeitskühlung verfügt, wobei der Elektromotor einen Stator aufweist, der aus einem oder mehreren allgemein planaren Wicklungen besteht, die mit einer ersten Seite eines Magnetkerns verbunden sind, welcher mindestens einen Kühlkanal aufweist.

Die US 7,795,773 B1 betrifft einen elektrischer Stellantrieb mit Wicklungen, die aus einem leitfähigen Kern aus Material mit hoher magnetischer Permeabilität gefertigt sind und von einem elektrischen Isolator umgeben sind. Der leitende Kern führt gleichzeitig einen elektrischen Strom und ein magnetisches Feld.

Die WO 2012/128646 A1 beschreibt eine Spulenbaugruppe für eine elektrische Mehrscheibenmaschine mit eisenfreiem Axialfluss und dreiphasigem Permanentmagnet. Die Spulenbaugruppe wird aus Spulenelementen aus Flachdraht zusammengesetzt und dann so bearbeitet, dass sie zu einer flachen Scheibe zusammengebaut werden können. Die Spulenelemente können weiterhin in einen Rahmen eingesetzt werden und die Spulenelemente können durch Drähte verbunden werden, die sich nicht kreuzen.

Der vorliegenden Erfindung liegt daher die Aufgabe zugrunde, ein Spulenmodul für eine elektrische Maschine vorzuschlagen, mit dem diese Nachteile überwunden werden und ein kompakter Aufbau mit reduziertem Platzbedarf realisierbar ist. Eine weitere, der Erfindung zugrunde liegende Aufgabe ist, eine effektive, platz- und/oder gewichtssparende Kühlung der elektrischen Maschine bereitzustellen.

Im Kontext der Erfindung ist unter einer elektrischen Maschine eine Vorrichtung zu verstehen, die elektrische Energie in mechanische Arbeit umwandelt oder umgekehrt. Unter dem Begriff "elektrische Maschine" kann insbesondere eine elektrische Kraftmaschine bzw. Elektromotor bzw. elektrischer Motor oder ein Elektrogenerator bzw. elektrischer Generator verstanden werden.

Eine, mehrere oder alle dieser Aufgaben werden gemäß der Erfindung gelöst von einem nachfolgend offenbarten Spulenmodul, einer nachfolgend offenbarten elektrischen Maschine und/oder einem nachfolgend offenbarten Fahrzeug oder Werkzeug.

Ein Spulenmodul für eine elektrische Maschine weist mindestens eine Spulenscheibe auf. Die Spulenscheibe wiederum weist einen Spulenträger aus einem elektrisch isolierenden Werkstoff und eine Vielzahl von einzelnen Wicklungen aus einem elektrisch leitfähigen Werkstoff, typischerweise in Drahtform, auf. Die Wicklungen sind um einen Mittelpunkt der mindestens einen Spulenscheibe umlaufend auf der mindestens einen Spulenscheibe angeordnet. Jede der Wicklungen weist zwei von dem Mittelpunkt ausgehend radial verlaufende aktive Bereiche und zwei tangential an ihrem radial äußeren und inneren Rand verlaufende passive Bereiche auf. In Draufsicht auf die mindestens eine Spulenscheibe überdecken die aktiven Bereiche unterschiedlicher Wicklungen einander nicht, aber jeder passive Bereich einer der Wicklungen überdeckt jeweils die entsprechenden passiven Bereiche der beiden unmittelbar benachbarten Wicklungen teilweise. In den aktiven Bereichen ist im Querschnitt eine Dicke der jeweiligen Wicklung in axialer Richtung größer als in den passiven Bereichen der jeweiligen Wicklung.

Obwohl im Rahmen dieser Schrift von einer Vielzahl einzelner Wicklungen die Rede ist, können mehrere einzelne elektrische Wicklungen, z.B. einzelne Wicklungen der gleichen Phase, miteinander verbunden sein.

Unter den aktiven Bereichen können die Bereiche der Wicklungen verstanden werden, die geeignet sind, um zum Drehmoment der elektrischen Maschine beizutragen und/oder im Magnetfeld mindestens eines benachbarten Magnetmoduls der elektrischen Maschine liegen. Entsprechend sind die passiven Bereiche der Wicklungen nicht geeignet, um zum Drehmoment der elektrischen Maschine beizutragen, und/oder liegen nicht im Magnetfeld eines benachbarten Magnetmoduls der elektrischen Maschine.

Im Rahmen dieser Schrift ist unter dem Begriff "Dicke der jeweiligen Wicklung in axialer Richtung" oder "Dicke in axialer Richtung" der Wicklung die Dicke der Wicklung zu verstehen, die in axialer Richtung gemessen wird. Ebenso ist unter der "Breite in tangentialer oder radialer Richtung" der Wicklung die Breite der Wicklung zu verstehen, die in tangentialer oder radialer Richtung gemessen wird. Das heißt, die Angabe "in axialer Richtung", "in tangentialer Richtung" und "in radialer Richtung" und vergleichbare Angaben geben die Richtung an, entlang der die jeweilige Größe (z.B. Dicke, Breite) gemessen wird.

Durch die teilweise Überlappung in den passiven Bereichen ist eine Menge an elektrisch leitfähigem Werkstoff, vorzugsweise Kupfer, in den passiven Bereichen typischerweise doppelt so hoch wie in den aktiven Bereichen. Um eine Aufdickung der Spulenscheibe und eines aus mindestens einer Spulenscheibe gebildeten Spulenmoduls in axialer Richtung zu verhindern, ist die Dicke in axialer Richtung im Querschnitt in den aktiven Bereichen größer als in den passiven Bereichen, so dass ein kompakter Aufbau gewährleistet wird. Unter einem elektrisch isolierenden Werkstoff soll dabei ein Werkstoff mit einer elektrischen Leitfähigkeit von weniger als 10⁻⁸ S/m bei einer Temperatur von 25 °C verstanden werden. Als elektrisch leitfähiger Werkstoff soll hierbei jeder Werkstoff verstanden werden, dessen elektrische Leitfähigkeit größer ist als 10⁶ S/m bei einer Temperatur von 25 °C. Als radiale Richtung soll im Rahmen dieser Schrift in Übereinstimmung mit gängigen Konventionen die ausgehend von dem Mittelpunkt in gerader Linie zum Rand verlaufende Richtung verstanden werden, als tangentiale Richtung dementsprechend eine rechtwinklig auf der radialen Richtung verlaufende Richtung. Im Rahmen dieser Schrift können unter den passiven Bereichen diejenigen Bereiche der Wicklungen verstanden werden, die nicht radial verlaufen und die die zwei aktiven Bereiche der jeweiligen einzelnen Wicklung miteinander verbinden. Die passiven Bereiche müssen jedoch nicht exakt tangential verlaufen. Beispielsweise können die passiven Bereiche auch vorzugsweise kurze radial verlaufende Bereiche aufweisen, die an die aktiven Bereiche angrenzen und in denen zum Beispiel ein Querschnittswechsel erfolgt. Dadurch, dass sich der Querschnitt der umlaufend angeordneten Wicklungen zwischen aktiven Bereichen und passiven Bereichen ändert, kann ein axialer Abstand des Luftspalts zwischen Magnetscheiben variiert und so ein relativer Kupferfüllgrad erhöht werden. Zudem kann durch die reduzierte Dicke in den passiven Bereichen eine dreiphasige Anordnung der Wicklungen leichter untergebracht werden. Als Draufsicht soll im Rahmen dieser Schrift eine Sicht entlang eines Normalenvektors der mindestens einen Spulenscheibe verstanden werden, als Seitenansicht entsprechend eine um 90° gegenüber der Draufsicht abgewinkelt Position. Der Normalenvektor soll hierbei von der Fläche ausgehend, in denen Länge und Breite der mindestens einen Spulenscheibe größer sind als eine Dicke der mindestens einen Spulenscheibe. In der elektrischen Maschine ist der Normalenvektor somit parallel zur Rotationsachse. Die auch als Spulen bezeichneten Wicklungen liegen vorzugsweisen als kernlose bzw. eisenkernlose Wicklungen vor. Unter dem Begriff "Spulenträger" soll im Rahmen dieser Schrift insbesondere ein Träger für Wicklungen bzw. Spulen verstanden werden, der typischerweise die Wicklungen mechanisch verbindet und vorzugsweise aus einem Epoxy-Harz oder anderem temperaturfestem Kunststoff besteht. Unter dem Begriff "Spulenscheibe" ist im Rahmen dieser Schrift ein entsprechender durch den Spulenträger fixierter Ring mit den Spulen bzw. Wicklungen zu verstehen, während der Begriff "Spulenmodul" ein komplettes Einbauteil mit mindestens einer Spulenscheibe, typischerweise aber zwei oder mehr Spulenscheiben bezeichnen soll.

Die Vielzahl von einzelnen Wicklungen kann beispielsweise in das Material des Spulenträgers, vorzugsweise Epoxy-Harz, eingegossen sein und so die Spulenscheibe bilden.

Ein Verhältnis der Dicke der jeweiligen Wicklung in den passiven Bereichen zu der Dicke in den aktiven Bereichen kann kleiner als 1 sein. Vorzugsweise ist das Verhältnis größer oder gleich 0,3 und kleiner 1, bei äußeren passiven Bereichen besonders vorzugsweise genau 0,5, um den größeren Bauraum auszunutzen und bei der Betrachtung der Spulenscheibe eine einheitliche relative Dicke mit dem aktiven Bereich von gleich 1 zu erzeugen.

Typischerweise ändert sich bei einem Übergang von einem aktiven Bereich zu einem passiven Bereich die Form der Querschnittsfläche der jeweiligen Wicklung. Vorzugsweise bleibt ein Flächeninhalt der Querschnittsfläche gleich und ein Füllfaktor wird maximal, was beispielsweise bei einem Verpressen erfolgen kann, aber durch die geänderte Form kann mehr Material von den Magnetfeldlinien durchflossen werden und somit der Antrieb effizienter gestaltet werden. Durch die geänderte Form kann der für den elektrisch leitfähigen Werkstoff verfügbare Bauraum bei gleichbleibendem Magnetabstand in der elektrischen Maschine verwendet werden und somit Leistung und Effizienz entsprechend gesteigert werden.

Es kann vorgesehen sein, dass alle aktiven Bereiche verschiedener Wicklungen, typischerweise aller Wicklungen, in Seitenansicht in einer einzelnen Ebene angeordnet sind und/oder diese schneiden.

Diese Ebene kann orthogonal zur Axialrichtung der Spulenscheibe bzw. der elektrischen Maschine sein. Ferner ist zu berücksichtigen, dass die aktiven Bereiche, z.B. in der aufgefächerten Ausführungsform, eine variierende Dicke aufweisen können, so dass deren Ober- und/oder Unterseiten unter Umständen nicht parallel zu der Ebene sein müssen. Bevorzugt sind die aktiven Bereiche so ausgebildet, dass sie die Ebene schneiden. Davon kann ein einzelner oder können wenige aktive Bereiche ausgenommen sein, in dem bzw. denen beispielsweise der hierin beschriebene Steg ausgebildet ist.

Das heißt, dass die aktiven Bereiche der verschiedenen Wicklungen in Seitenansicht in Richtung entlang des Normalvektors der Spulenscheibe alle auf der gleichen Höhe angeordnet sein können, so dass z.B. kein aktiver Bereich bezüglich der anderen aktiven Bereiche hervorsteht. Davon kann ein einzelner oder können wenige aktive Bereiche ausgenommen sein, in dem bzw. denen beispielsweise der hierin beschriebene Steg ausgebildet ist.

Durch die Anordnung in einer einzigen Ebene wird erreicht, dass alle aktiven Bereiche gleichermaßen im Magnetfeld eines Magnetmoduls liegen. Alternativ dazu ist es bevorzugt, dass beinahe alle, vorzugsweise alle bis auf einen, aktiven Bereiche der verschiedenen Wicklungen in Seitenansicht in Richtung entlang des Normalvektors der Spulenscheibe alle auf der gleichen Höhe angeordnet sind, so dass z.B. nur eine geringe Anzahl, vorzugsweise ein, aktiver Bereich bezüglich der anderen aktiven Bereiche hervorsteht. Beispielsweise kann in diesem Bereich der hierin beschriebene Steg angeordnet sein.

Vorzugsweise nimmt die Dicke in axialer Richtung der aktiven Bereiche der jeweiligen Wicklungen in radialer Richtung nach außen ab. Weiterhin nimmt die Breite in tangentialer Richtung der aktiven Bereiche der jeweiligen Wicklungen in radialer Richtung nach außen zu.

Mit anderen Worten sind die aktiven Bereiche nach außen hin aufgefächert.

Durch diese Auffächerung der aktiven Bereiche ist es möglich, mehr leitfähigen Werkstoff in den jeweiligen Wicklungen bei gleicher Dicke in axialer Richtung der Spulenscheibe zu verbauen. Dies führt wiederum zu einer leistungsfähigeren elektrischen Maschine und/oder zu einem höheren Wirkungsgrad der elektrischen Maschine.

Diese Auffächerung muss jedoch nicht in den gesamten aktiven Bereichen der Wicklungen vorliegen. Beispielsweise können die aktiven Bereiche angrenzend an die passiven Bereiche jeweilige Übergänge aufweisen, die von dieser Auffächerung ausgenommen sind.

Vorzugsweise bleibt die Querschnittsfläche der aktiven Bereiche entlang der radialen Richtung konstant.

Typischerweise sind die Wicklungen aus einer feinen Litze aus mehreren gegeneinander elektrisch isolierten Drähten gebildet, wobei die elektrisch zueinander isolierten Drähte einen Drahtdurchmesser kleiner gleich 0,1 mm aufweisen. Durch mehrere mit einer elektrisch isolierenden Beschichtung versehene Litzen kann sowohl eine ausreichende Flexibilität der aus dem Draht gebildeten Wicklung bei der Fertigung gewährleistet als auch eine ausreichend hohe elektrische Leitfähigkeit erreicht werden.

Eine Anzahl der Wicklungen entspricht vorzugsweise einem ganzzahligen Vielfachen von 3, so dass die Wicklungen einen Drei-Phasen-Betrieb ermöglichen. Es werden somit also insgesamt drei Stränge unterschiedlicher Phasen aus den Wicklungen gebildet. In besonders bevorzugter Weise liegen hierbei alle aktiven Bereiche der Wicklungen aller Phasen in Seitenansicht in einer einzigen Ebene, während die passiven Bereiche der verschiedenen Phasen auf zwei Ebenen verteilt sind. Typischerweise sind die passiven Bereiche zweier Phasen jeweils in einer Ebene und die passiven Bereiche der dritten Phase vollziehen einen zusätzlichen Ebenenwechsel. Die beiden Ebenen sind typischerweise voneinander verschieden bzw. versetzt, aber parallel zueinander.

Es kann vorgesehen sein, dass alle Wicklungen identisch aufgebaut sind, also insbesondere identische Abmessungen und Formen aufweisen. Es kann alternativ aber auch vorgesehen sein, zumindest eine in ihrer Form oder Dicke sich von den restlichen Wicklungen unterscheidende Wicklung zu verwenden.

Die Spulenscheibe kann derart ausgebildet sein, dass sich ein innerer passiver Bereich und ein äußerer passiver Bereich einer der Wicklungen in ihrer Dicke in axialer Richtung unterscheiden. Der innere passive Bereich ist hierbei zu dem Mittelpunkt der Spulenscheibe und des Spulenmoduls in geringerem Abstand angeordnet als der äußere passive Bereich. Typischerweise ist hierbei die Dicke des äußeren passiven Bereichs einer der Wicklungen so gewählt, dass ein Verhältnis der Dicke dieses Bereichs zu der Dicke der aktiven Bereiche kleiner gleich 0,5 ist. Für den inneren passiven Bereich kann vorgesehen sein, dass das Verhältnis der Dicke dieses inneren passiven Bereichs zu der Dicke der aktiven Bereiche kleiner 1 ist. Hierdurch kann die Kühloberfläche von den aktiven Bereichen noch auf die äußeren passiven Bereiche erweitert werden.

Die Erfindung betrifft ferner eine elektrische Maschine mit einer Lagerung und einer in der Lagerung geführten Welle, wobei entlang der Welle mindestens ein Magnetmodul mit mehreren Permanentmagneten und mindestens ein im Rahmen dieser Schrift offenbartes Spulenmodul konzentrisch angeordnet sind.

Die elektrische Maschine wie ein Elektromotor bzw. elektrischer Motor oder ein Elektrogenerator bzw. elektrischer Generator weist eine Lagerung und eine in der Lagerung geführte Welle auf. Entlang der Welle sind mindestens ein Magnetmodul mit mehreren Permanentmagneten und mindestens ein Spulenmodul mit den zuvor beschriebenen Eigenschaften konzentrisch angeordnet, wobei das Magnetmodul an der Welle angebracht ist und das Spulenmodul mit einem Gehäuse verbunden ist. Durch die hohe Packungsdichte der Wicklungen wird eine besonders vorteilhafte Effizienz und Leistungsdichte beim Betrieb der elektrischen Maschine erreicht.

Das mindestens eine Spulenmodul kann zumindest an seiner dem Magnetmodul zugewandten Seite mit einer Folie aus einem elektrisch isolierenden Werkstoff beklebt sein, um einen Flüssigkeitsdurchtritt zu verhindern und ein Ausbilden von Kühlkanälen zu ermöglichen. Statt einer Klebeverbindung kann die Folie auch durch eine andere Verbindung wie eine Schweißverbindung als stoffschlüssige Verbindung oder eine kraftschlüssige Verbindung, beispielsweise durch einen aufgeschraubten Ring, aufgebracht sein.

Um die elektrische Maschine und insbesondere die aktiven Bereiche effizient zu kühlen, kann das mindestens eine Spulenmodul mindestens zwei miteinander verbundene Spulenscheiben und einen durch einen Hohlraum zwischen den beiden Spulenscheiben gebildeten Kühlkanal aufweisen. Alternativ oder zusätzlich kann der Kühlkanal auch durch die Spulenscheibe oder das Spulenmodul und die Folie gebildet und begrenzt werden.

Die Erfindung betrifft ferner ein Fahrzeug oder eine Werkzeugmaschine bzw. ein Werkzeug mit einer im Rahmen dieser Schrift offenbarten elektrischen Maschine.

Eine, mehrere oder alle der der Erfindung zugrunde liegenden Aufgaben werden der Erfindung durch das nachfolgend offenbarte Spulenmodul, die nachfolgend offenbarte elektrische Maschine und/oder das nachfolgend offenbarte Fahrzeug oder die nachfolgend offenbarte Werkzeugmaschine gelöst.

Da das nachfolgend beschriebene Spulenmodul mehrere Merkmale enthält, die auch im Zusammenhang mit dem oben beschriebenen Spulenmodul offenbart sind, treffen oben beschriebene technische Effekte, Vorteile und Erläuterungen auch auf nachfolgend beschriebene, entsprechende Merkmale zu. Insbesondere ist zu beachten, dass das nachfolgend beschriebene Spulenmodul vorzugsweise jedes oben im Zusammenhang mit dem Spulenmodul beschriebene Merkmale aufweisen kann.

Das Spulenmodul weist eine erste Spulenscheibe mit mindestens einer Wicklung aus einem elektrisch leitenden Werkstoff und eine zweite Spulenscheibe mit mindestens einer Wicklung aus einem elektrisch leitenden Werkstoff auf. Die erste Spulenscheibe und/oder die zweite Spulenscheibe weisen/weist eine im Wesentlichen ringförmige Ausnehmung auf. Die erste Spulenscheibe und die zweite Spulenscheibe sind weiterhin derart aneinander angebracht, dass zwischen der ersten Spulenscheibe und der zweiten Spulenscheibe durch die ringförmige Ausnehmungen/Ausnehmung ein im Wesentlicher ringförmiger Kühlkanal für ein Kühlmittel gebildet wird.

Das Spulenmodul, die erste Spulenscheibe, die zweite Spulenscheibe sowie die Wicklungen der ersten und zweiten Spulenscheibe können wie oben offenbart ausgebildet sein.

Unter einer im Wesentlichen ringförmigen Ausnehmung kann eine Ausnehmung verstanden werden, die sich im Wesentlichen um den gesamten Umfang der Spulenscheibe erstreckt. Die Angabe "im Wesentlichen" bedeutet, dass die Ausnehmung beispielsweise einen (oder mehrere) nachfolgend detaillierter beschriebenen Steg aufweist, der die im Wesentlichen ringförmige Ausnehmung unterbricht. Die im Wesentlichen ringförmige Ausnehmung kann sich um einen Mittelpunkt der Spulenscheibe erstrecken und sich nicht im Mittelpunkt der Spulenscheibe befinden. Unter dem Mittelpunkt der Spulenscheibe ist dabei der Punkt der Spulenscheibe zu verstehen, durch den die Rotationsachse der Welle bzw. der elektrischen Maschine läuft.

Die radial äußere und/oder die radial innere Kante der im Wesentlichen ringförmigen Ausnehmung kann in Draufsicht (d.h. einer Ansicht orthogonal zur Längs- und Breitenrichtung) auf die Spulenscheibe kreisförmig sein. Die radial äußere und radial innere Kante der Ausnehmung bezeichnen hierbei jeweils den Übergang von der im Wesentlichen ebenen Fläche der Spulenscheibe zur im Wesentlichen ringförmigen Ausnehmung. Die Form von der äußeren und/oder inneren Kante kann jedoch auch von einer exakten Kreisform abweichen. Beispielsweise kann die äußere und/oder innere Kante gewellt sein. Weiterhin kann die äußere und/oder innere Kante auch eine polygonale Form haben.

Die Ausnehmung kann einen rechteckigen Querschnitt mit zwei gegenüberliegenden Seitenflächen und einer Bodenfläche haben. Alternativ kann die Ausnehmung auch einen trapezförmigen Querschnitt haben, bei dem der Abstand der gegenüberliegenden Seitenflächen zur Bodenflächen hin abnimmt. Weiterhin kann die Ausnehmung auch einen kreisbogenförmigen oder gekrümmten Querschnitt haben.

Mit anderen Worten kann unter der ringförmigen Ausnehmung eine im Wesentlichen ringförmige Vertiefung in der Spulenscheibe verstanden werden. Die Spulenscheibe kann im Bereich der im Wesentlichen ringförmigen Ausnehmung eine geringere Dicke aufweisen als in Bereichen außerhalb der ringförmigen Ausnehmung.

Die Spulenscheibe wird vorzugsweise durch Eingießen der mindestens einen Wicklung in den elektrisch isolierenden Werkstoff, z.B. Epoxy-Harz, hergestellt. Dafür können die Wicklungen in eine Form eingelegt werden, die anschließend mit dem elektrisch isolierenden Werkstoff gefüllt wird. Anschließend kann die im Wesentlichen ringförmige Ausnehmung in einem Pressvorgang hergestellt werden. Beispielsweise mittels einer im Wesentlichen ringförmigen Form oder eines Stempels.

Die Form, in die die mindestens eine Wicklung eingelegt wird, kann Vorsprünge aufweisen, die die Spalte zwischen den aktiven Bereichen der Wicklungen freihalten, so dass die Spulenscheibe in einem im Wesentlichen ringförmigen Bereich, in dem sich die aktiven Bereiche der Wicklungen befinden, zwischen den aktiven Bereichen Luftspalte aufweist. Die Spulenscheibe mit diesen Spalten kann besonders für die Luftkühlung der elektrischen Maschine geeignet sein, wobei auch eine andere Form der Kühlung beispielsweise mittels eines Kühlmittels (z.B. Wasser-Glykol-Gemisch) bevorzugt ist.

Im Falle der hierin beschriebenen aufgefächerten aktiven Bereiche kann vorzugsweise auf diese Vorsprünge in der Form verzichtet werden, so dass die Abstände zwischen den aktiven Bereichen sehr klein ausfallen können und nach dem Eingießen kein Spalt zwischen den aktiven Bereichen verbleibt.

Die im Wesentlichen ringförmige Ausnehmung kann jedoch auch mittels anderer Verfahren hergestellt werden. Beispielsweise kann die Form selbst, in die der elektrisch isolierende Werkstoff eingelassen wird, die Ausnehmung definieren, so dass kein nachträglicher Pressvorgang erforderlich ist. Die im Wesentlichen ringförmige Ausnehmung kann weiterhin beispielsweise durch Fräsen hergestellt werden.

Eine solche im Wesentlichen ringförmige Ausnehmung kann in einer der ersten und/oder zweiten Spulenscheibe bereitgestellt sein. Vorzugsweise ist sowohl in der ersten als auch in der zweiten Spulenscheibe jeweils eine im Wesentlichen ringförmige Ausnehmung bereitgestellt.

Wie bereits erwähnt, ist im Rahmen dieser Schrift unter einer Scheibe ein Körper zu verstehen, dessen Länge und Breite bzw. dessen Durchmesser deutlich, z.B. um einen Faktor 10, größer sind bzw. ist als dessen Dicke. Unter den Seiten der Scheibe sind die Körperseiten zu verstehen, die parallel zu der durch Länge und Breite aufgespannten Ebene, d.h. orthogonal zur axialen Richtung der elektrischen Maschine, sind. Die im Wesentlichen ringförmige Ausnehmung ist in einer der Seiten der Spulenscheibe vorgesehen. Die Spulenscheibe kann jedoch auch auf beiden Seiten jeweils eine im Wesentlichen Ringförmige Ausnehmung aufweisen.

Die erste und zweite Spulenscheibe können derart aneinander angebracht sein, dass eine der zwei Seiten der ersten Spulenscheibe an eine der zwei Seiten der zweiten Spulenscheibe anliegt, wobei nicht ausgeschlossen ist, dass eine Dichtungsschicht dazwischen angeordnet ist. Beispielsweise können die erste und zweite Spulenscheibe miteinander verklebt werden, wobei der Klebstoff gleichzeitig, z.B. den Kühlmittelkanal gegenüber der Umgebung, abdichten kann.

Im Folgenden werden die Seiten der ersten und zweiten Spulenscheibe, die an der anderen Spulenscheibe anliegen jeweils innere Seite genannt. Entsprechen werden die Seiten der ersten und zweiten Spulenscheibe, die nach außen gerichtet sind und nicht an der anderen Spulenscheibe anliegen, äußere Seiten genannt. Es kann daher verstanden werden, dass die im Wesentlichen ringförmige Ausnehmung auf der inneren Seite der ersten Spulenscheibe und/oder der inneren Seite der zweiten Spulenscheibe bereitgestellt ist.

Falls die erste und die zweite Spulenscheibe jeweils eine Ausnehmung aufweisen, haben die Ausnehmungen der ersten und zweiten Spulenscheibe vorzugsweise identische Formen und sind vorzugsweise so angeordnet, dass sie einander genau gegenüberliegen und/oder überdecken. Es ist jedoch auch möglich, dass die Ausnehmung der ersten Spulenscheibe eine andere Form hat als die Ausnehmung der zweiten Spulenscheibe und/oder dass sie im zusammengebauten Zustand des Spulenmoduls zueinander versetzt sind.

Unter dem im Wesentlichen ringförmigen Kühlkanal kann ein von der ersten und zweiten Spulenscheibe begrenzter Raum verstanden werden, der einerseits von der Wandung der Ausnehmung in der ersten oder zweiten Spulenscheibe und andererseits von der inneren Seite der zweiten Spulenscheibe begrenzt wird. Vorzugsweise ist der im Wesentlichen ringförmige Kühlkanal von zwei Ausnehmungen begrenzt, die in der ersten Spulenscheibe und der zweiten Spulenscheibe bereitgestellt sind. Der im Wesentlichen ringförmige Kühlkanal muss jedoch nicht vollständig begrenzt sein. Das heißt, der im Wesentlichen ringförmige Kühlkanal kann beispielsweise eine Einlassöffnung und/oder eine Auslassöffnung aufweisen, mittels welcher Kühlmittel in den Kühlkanal gelangen und/oder davon abgeführt werden kann.

Dieser Kühlkanal bietet den Vorteil, dass ein Kühlmittel sehr nahe zu den Windungen gebracht werden kann, so dass die elektrische Maschine sehr effektiv gekühlt werden kann. Gleichzeitig erfordert diese Kühlstruktur keine zusätzlichen Komponenten zum Leiten des Kühlmittels, so dass diese Kühlstruktur platz- und gewichtssparend ist. Darüber hinaus ist diese Kühlstruktur auch sehr robust und nicht fehleranfällig.

Das Kühlmittel ist vorzugsweise wasserbasiertes Kühlmittel, weiter bevorzugt ein Wasser-Glykol-Gemisch. Als Kühlmittel kann aber auch Transformatorenöl eingesetzt werden. Das hierin beschriebene Spulenmodul kann jedoch auch luftgekühlt sein.

Vorzugsweise weisen/weist die erste Spulenscheibe und/oder die zweite Spulenscheibe im Bereich der Ausnehmung eine Einlassöffnung auf, um Kühlmittel in den im Wesentlichen ringförmigen Kühlkanal zu leiten. Alternativ oder zusätzlich weisen/weist die erste Spulenscheibe und/oder die zweite Spulenscheibe im Bereich der Ausnehmung eine Auslassöffnung auf, um Kühlmittel von dem im Wesentlichen ringförmigen Kühlkanal nach außen zu leiten.

Die Einlassöffnung und/oder Auslassöffnungen können beispielsweise in der radial äußeren Seitenfläche der Ausnehmung vorgesehen sein. Vorzugsweise ist die Einlassöffnung in der Seitenfläche der Ausnehmung der ersten Spulenscheibe vorgesehen und die Auslassöffnung ist in der Seitenfläche der zweiten Ausnehmung oder umgekehrt. Ausgehend von der Einlassöffnung kann sich in der ersten Spulenscheibe ein Einlasskanal erstrecken und ausgehend von der Auslassöffnung kann sich in der zweiten Spulenscheibe ein Auslasskanal erstrecken. Der Einlasskanal und der Auslasskanal können sich jeweils von der Ein- bzw. Auslassöffnung radial nach außen erstrecken. Der Einlasskanal kann als Ausnehmung in der ersten Spulenscheibe und der Auslasskanal kann als Ausnehmung in der zweiten Spulenscheibe ausgebildet sein. Am der Einlassöffnung gegenüberliegenden Ende des Einlasskanals kann ein Einlassloch und/oder eine Einlassdurchgangsbohrung in der ersten und der zweiten Spulenscheibe vorgesehen sein, um das Kühlmittel in den Einlasskanal zu leiten. Am der Auslassöffnung gegenüberliegenden Ende des Auslasskanals kann in der ersten und zweiten Spulenscheibe ein Auslassloch und/oder eine Auslassdurchgangsbohrung in der Spulenscheibe vorgesehen sein, um das Kühlmittel aus dem Auslasskanal heraus zu leiten.

Der Einlasskanal und/oder der Auslasskanal erstrecken sich vorzugsweise in einem äußeren passiven Bereich einer Wicklung, der die äußeren passiven Bereichen der unmittelbar benachbarten Wicklungen nicht oder nur teilweise überdeckt. Auf diese Weise ist der Einlass- und/oder Auslasskanal in einem Bereich angeordnet, in dem die Dicke der Wicklungen möglichst gering ist. Dies erlaubt eine platzsparende Anordnung.

Alternative können die Einlass- und Auslassöffnungen sowie die Einlass- und Auslasskanäle nur in einer der beiden Spulenscheiben oder in jeweils in beiden Spulenscheiben vorgesehen sein.

Falls die elektrische Maschine mehrere Spulenmodule aufweist, die über einen Spulenabstandshalter miteinander verbunden sind, kann der Spulenabstandshalter ebenfalls Einlass- und Auslasslöcher aufweisen. Im zusammengebauten Zustand überdecken sich die Einlasslöcher der verschiedenen Spulenmodule und der dazwischen angeordneten Spulenabstandshalter. Ebenso überdecken sich im zusammengebauten Zustand die Auslasslöcher der verschiedenen Spulenmodule und der dazwischen angeordneten Spulenabstandshalter. Mit anderen Worten können alle Einlass- und Auslasslöcher jeweils auf einer Linie liegen.

Dabei können beispielsweise bei der bzw. dem in axialer Richtung gesehen an einem Ende der elektrischen Maschine liegenden Spulenscheibe oder Spulenabstandshalter die Einlass- und Auslasslöcher weggelassen werden. Bei der bzw. dem am anderen Ende der elektrischen Maschine liegenden Spulenscheibe oder Spulenabstandshalter kann durch die Ein- und Auslasslöcher das Kühlmittel in die einzelnen Spulenmodule geleitet werden. Auf diese Weise können die unterschiedlichen Spulenmodule hinsichtlich des Kühlmittelflusses parallel miteinander verbunden werden.

Eine erste Verbindungslinie zwischen der Einlassöffnung und dem Mittelpunkt der Spulenscheibe und eine zweite Verbindungslinie zwischen der Auslassöffnung und dem Mittelpunkt der Spulenscheibe können in einer Draufsicht auf die Spulenscheibe einen Winkel einschließen, der vorzugsweise kleiner als 30°, weiter bevorzugt kleiner als 20°, noch weiter bevorzugt kleiner als 10° ist. Insbesondere ist bevorzugt, die Öffnungen so nah wie möglich beieinander anzuordnen, so dass der entsprechende Winkel möglichst klein ist. Auf diese Weise kann gewährleistet werden, dass das Kühlmittel möglichst vollständig um den Mittelpunkt der Spulenscheibe fließt, um eine Kühlung aller Windungen zu gewährleisten.

Vorzugsweise weist die erste Spulenscheibe und/oder die zweite Spulenscheibe in der Ausnehmung zwischen der Einlassöffnung und der Auslassöffnung einen Steg auf, der derart ausgebildet ist, dass der im Wesentlichen ringförmige Kühlkanal zwischen der Einlassöffnung und der Auslassöffnung eine Trennwand aufweist. Dabei ist zu verstehen, dass der Steg zwischen der kürzesten Verbindung der Einlassöffnung und der Auslassöffnung in der Ausnehmung angeordnet ist, um das Kühlmittel dazu zu zwingen, um fast den gesamten Umfang der Spulenscheibe herum zu fließen.

Unter dem Steg kann eine Unterbrechung der Ausnehmung verstanden werden. Mit anderen Worten kann verstanden werden, dass der Steg von der radial inneren Kante der Ausnehmung zur radial äußeren Kante der Ausnehmung verläuft. Der Steg kann beispielsweise radial von der inneren Kante der Ausnehmung zur äußeren Kante der Ausnehmung verlaufen. Alternativ kann der Steg einen Winkel zur radialen Richtung bilden. Der Steg kann dabei eine Oberseite aufweisen, die über der Bodenfläche der Ausnehmung, vorzugsweise in der gleichen Ebene wie die restliche innere Seite der Spulenscheibe, liegt. Dabei ist der Steg vorzugsweise so schmal wie möglich ausgebildet, so dass er weiterhin eine wirksame Blockade für das Kühlmittel darstellt.

Vorzugsweise schließt auch die erste Verbindungslinie zwischen der Einlassöffnung und dem Mittelpunkt der Spulenscheibe und die zweite Verbindungslinie zwischen der Auslassöffnung und dem Mittelpunkt der Spulenscheibe einen Winkel ein, der kleiner als 30° ist. Aufgrund des Stegs zwischen der Einlass- und Auslassöffnung kann das Kühlmittel nicht den "kurzen Weg" zwischen Einlass- und Auslassöffnung nehmen und wird gezwungen, um den restlichen, deutlich größeren Kreisbogenabschnitt des Kühlkanals zu fließen.

Dieser Steg bildet im Kühlkanal eine Barriere für das Kühlmittel. Durch diesen Steg wird daher sichergestellt, dass das Kühlmittel durch alle relevanten Bereiche der ersten und zweiten Spulenscheibe fließt und so alle relevanten Bereiche der ersten und zweiten Spulenscheibe kühlt.

Vorzugsweise weisen die erste und zweite Spulenscheibe jeweils eine Ausnehmung und einen Steg auf. Im zusammengebauten Zustand des Spulenmoduls liegen der Steg der ersten Spulenscheibe und der Steg der zweiten Spulenscheibe aufeinander, wobei nicht ausgeschlossen ist, dass dazwischen eine Klebstoff- und/oder Dichtungsschicht angeordnet ist, wobei der Klebstoff gleichzeitig die Dichtung darstellen kann.

Vorzugsweise weisen die erste Spulenscheibe und die zweite Spulenscheibe jeweils auf: mindestens einen Spulenträger aus einem elektrisch isolierenden Werkstoff und eine Vielzahl von einzelnen Wicklungen aus einem elektrisch leitfähigen Werkstoff, die um einen Mittelpunkt der mindestens einen Spulenscheibe umlaufend auf der mindestens einen Spulenscheibe angeordnet sind. Dabei weist jede der Wicklungen zwei von dem Mittelpunkt ausgehend radial verlaufende aktive Bereiche und zwei tangential an ihrem radial äußeren und inneren Rand verlaufende passive Bereiche auf. Weiterhin überdecken in Draufsicht auf die Spulenscheibe die aktiven Bereiche unterschiedlicher Wicklungen einander nicht, aber jeder passive Bereich einer der Wicklungen überdeckt jeweils die entsprechenden passiven Bereiche der beiden unmittelbar benachbarten Wicklungen teilweise. Ferner weisen die jeweiligen Wicklungen in den aktiven Bereichen im Querschnitt eine größere Dicke in axialer Richtung aufweist als in den passiven Bereichen.

Weitere technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise sind/ist die Ausnehmungen/Ausnehmung zumindest im Bereich der radial verlaufenden aktiven Bereiche, vorzugsweise auch im Bereich der radial äußeren passiven Bereiche, angeordnet.

Da die passiven Bereiche einer der Wicklungen jeweils die entsprechenden passiven Bereiche der unmittelbar benachbarten Wicklungen teilweise überdecken und die aktiven Bereiche der unterschiedlichen Wicklungen einander nicht überdecken, kann in den aktiven Bereichen der ersten und/oder zweiten Spulenscheibe Raum für die Ausnehmung vorhanden sein. Dadurch dass dieser Raum wird für die Kühlung verwendet wird, führt das Bereitstellen des Kühlkanals mittels der Ausnehmung/Ausnehmungen nicht zu einem erhöhten Platzverbrauch. Gleichzeitig bietet diese Art der Wicklung oben bereits erläutert den Vorteil, dass viel leitfähiges Material auf geringem Raum verbaut werden kann.

Die Ausnehmungen/Ausnehmung kann jedoch auch zumindest teilweise in den passiven Bereichen, vorzugsweise in den radial äußeren passiven Bereichen, vorgesehen sein. Beispielsweise können die radial äußeren passiven Bereiche eine größere Breite in radialer Richtung aufweisen als die radial inneren passiven Bereiche, so dass es möglich ist, die radial äußeren passiven Bereiche mit einer kleineren Dicke in axialer Richtung auszubilden. Es ist auch möglich, dass nicht die gesamten passiven Bereiche der unterschiedlichen Wicklungen die passiven Bereiche der unmittelbar benachbarten Wicklungen überdecken. So kann beispielsweise auf diese Weise auch in den passiven Bereichen Raum für die Ausnehmung vorhanden sein.

Vorzugsweise nimmt die Dicke in axialer Richtung der aktiven Bereiche der jeweiligen Wicklung der ersten und/oder zweiten Spulenscheibe in radialer Richtung nach außen ab. Weiterhin nimmt die Breite in tangentialer Richtung der aktiven Bereiche der jeweiligen Wicklung der ersten und/oder zweiten Spulenscheibe in radialer Richtung nach außen zu.

Diese Struktur wird auch als "Auffächerung" der aktiven Bereiche bezeichnet.

Dabei muss die Dicke in axialer Richtung nicht entlang der gesamten Länge der aktiven Bereiche nach außen abnehmen und die Breite in tangentialer Richtung muss nicht entlang der gesamten Länge der aktiven Bereiche nach außen zunehmen. Vorzugsweise sind jedoch die aktiven Bereiche entlang mindestens 70%, vorzugsweise mindestens 90% deren Länge aufgefächert.

Weitere technische Effekte, Vorteile und/oder Erläuterungen zu diesen Merkmalen sind bereits an anderer Stelle in dieser Schrift offenbart und treffen auch auf die vorliegend beschriebenen Merkmale zu.

Ein weiterer Vorteil dieser Auffächerung liegt darin, dass der Abstand bzw. Spalt zwischen einem aktiven Bereich einer Wicklung und den aktiven Bereichen der unmittelbar benachbarten Wicklungen verringert werden kann.

Ein daraus resultierender Vorteil ist, dass, wenn die Ausnehmung in den aktiven Bereichen der Wicklung oder Wicklungen liegt, die Bodenfläche der Ausnehmung durch die Spulenscheibe selbst abgedichtet ist. Das heißt, dass sich zwischen den aktiven Bereichen der Wicklung oder Wicklungen kein Spalt befindet, der zusätzlich abgedichtet werden müsste. Die Spulenscheibe ist somit nicht nur selbsttragend, sondern auch selbstdichtend.

Auf diese Weise kann beispielsweise auf die oben beschriebene Folie verzichtet werden, so dass das Spulenmodul insgesamt in axialer Richtung eine geringere Dicke aufweist. Auf diese Weise kann das Magnetmodul in der elektrischen Maschine näher an die Wicklung oder Wicklungen gebracht werden, was wiederum die Leistungsfähigkeit und/oder den Wirkungsgrad der elektrischen Maschine erhöht.

Weiterhin bedeutet dies, dass weniger Verfahrensschritte zur Herstellung der Spulenscheibe, Spulenmodule und/oder elektrischen Maschine nötig sind. Ferner können auch die Werkzeuge zum Formen der Spulenscheibe vereinfacht werden, da keine Zwischenräume zwischen den aktiven Bereichen der Wicklungen freigehalten werden müssen. Insgesamt können so die Herstellungskosten für die elektrische Maschine gesenkt werden.

Vorzugsweise beträgt der Abstand eines aktiven Bereichs einer Wicklung zu den aktiven Bereichen der unmittelbar benachbarten Wicklungen wenige Mikrometer.

Vorzugsweise nimmt eine Tiefe in axialer Richtung der Ausnehmung in radialer Richtung nach außen zu.

Unter der Tiefe in axialer Richtung der Ausnehmung ist die in axialer Richtung gemessene Tiefe der Ausnehmung zu verstehen, z.B. die Differenz zwischen dem untersten Punkt (z.B. der Bodenfläche) der Ausnehmung und einer durch die innere Seite der Spulenscheibe definierte Ebene.

Darunter, dass die Tiefe in axialer Richtung der Ausnehmung in radialer Richtung nach außen zunimmt, kann verstanden werden, dass ein innerer radialer im Wesentlichen ringförmiger Bereich der Ausnehmung eine geringere Tiefe aufweist als ein dazu weiter außen liegender im Wesentlichen ringförmiger Bereich der Ausnehmung.

Die Tiefe kann dabei kontinuierlich (d.h. stetig) oder stufenweise (d.h. unstetig) von innen nach außen zunehmen. Die Tiefe kann ferner linear oder nichtlinear von innen nach außen zunehmen.

Diese Geometrie der Ausnehmung wird auch "V-Cooling" Geometrie genannt.

Vorzugsweise ist ein Verhältnis der Dicke der jeweiligen Wicklung in den passiven Bereichen zu der Dicke in den aktiven Bereichen kleiner als 1.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise ist das Verhältnis der Dicke der jeweiligen Wicklung in den passiven Bereichen zu der Dicke in den aktiven Bereichen größer oder gleich als 0,3 und kleiner als 1.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise ist die summierte Dicke in axialer Richtung zweier unmittelbar benachbarter Wicklungen im Bereich der überlappenden passiven Bereiche größer als die Dicke in axialer Richtung jeder der beiden unmittelbar benachbarten Wicklungen in den aktiven Bereichen. Beispielsweise ist die summierte Dicke in axialer Richtung zweier unmittelbar benachbarter Wicklungen im Bereich der überlappenden inneren passiven Bereiche und im Bereich der überlappenden äußeren passiven Bereichen größer als die Dicke in axialer Richtung jeder der beiden unmittelbar benachbarten Wicklungen in den aktiven Bereichen. Alternativ kann die summierte Dicke in axialer Richtung zweier unmittelbar benachbarter Wicklungen im Bereich der überlappenden inneren passiven Bereiche größer als die Dicke in axialer Richtung jeder der beiden unmittelbar benachbarten Wicklungen in den aktiven Bereichen sein. Zusätzlich kann die summierte Dicke in axialer Richtung der beiden unmittelbar benachbarten Wicklungen im Bereich der überlappenden äußeren passiven Bereiche kleiner sein als die Dicke in axialer Richtung jeder der beiden unmittelbar benachbarten Wicklungen in den aktiven Bereichen.

Aufgrund der fließenden Übergänge der Dicken können einzelne kurze Bereiche der Wicklungen andere Dicken aufweisen, die von den oben genannten Dicken abweichen.

Dies kann auf alle oder im Wesentlichen alle unmittelbar benachbarten Wicklungen zutreffen. Das heißt, ein aktiver Bereich oder wenige aktive Bereiche können im Bereich des hierin beschriebenen Stegs liegen und somit eine größere Dicke aufweisen als die anderen aktiven Bereiche.

Unter der summierten Dicke in axialer Richtung zweier unmittelbar benachbarter Wicklungen im Bereich der überlappenden passiven Bereiche ist die Summe der jeweiligen Dicke in axialer Richtung der jeweiligen passiven Bereiche der jeweiligen Wicklungen zu verstehen, wobei die Dicke der jeweiligen passiven Bereiche in einem Bereich gemessen wird, in dem die passiven Bereiche der unmittelbar benachbarten Wicklungen überlappen.

Dies kann für die radial inneren und radial äußeren passiven Bereiche zutreffen. Alternativ kann auch nur im Bereich der radial inneren passiven Bereichen die summierte Dicke in axialer Richtung der beiden unmittelbar benachharten Wicklungen größer sein als die Dicke in axialer Richtung jeder der beiden unmittelbar benachbarten Wicklungen in den aktiven Bereichen.

Auf diese Weise nehmen die aktiven Bereiche und gegebenenfalls die äußeren passiven Bereiche in axialer Richtung vorzugsweise insgesamt weniger Raum ein als die passiven Bereiche. Dadurch ist den Spulenscheiben im Bereich der aktiven Bereiche und gegebenenfalls der äußeren passiven Bereiche Raum für die Ausnehmung.

Vorzugsweise ist ein Verhältnis der summierten Dicke in axialer Richtung zweier unmittelbar benachbarter Wicklungen im Bereich der überlappenden passiven Bereiche zur maximalen Dicke in axialer Richtung jeder der beiden unmittelbar benachbarten Wicklungen in den aktiven Bereichen größer als 1.

Dies kann auf alle unmittelbar benachbarten Wicklungen zutreffen.

Vorzugsweise ändert sich bei einem Übergang von einem aktiven Bereich zu einem passiven Bereich die Form der Querschnittsfläche der jeweiligen Wicklung.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise sind alle aktiven Bereiche verschiedener Wicklungen in Seitenansicht in einer einzelnen Ebene angeordnet.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise sind die Wicklungen aus einer feinen Litze aus mehreren gegeneinander elektrisch isolierten Drähten gebildet, die einen Drahtdurchmesser kleiner gleich 0,1 mm aufweisen.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise entspricht eine Anzahl der Wicklungen einem ganzzahligen Vielfachen von 3, so dass die Wicklungen einen Drei-Phasen-Betrieb ermöglichen.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise unterscheiden sich ein innerer passiver Bereich und ein äußerer passiver Bereich einer der Wicklungen in ihrer Dicke in axialer Richtung.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Vorzugsweise ist die Dicke des äußeren passiven Bereichs einer der Wicklungen so gewählt, dass ein Verhältnis der Dicke dieses Bereichs zu der Dicke der aktiven Bereiche kleiner gleich 0,5 ist.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Die Erfindung betrifft ferner eine elektrische Maschine mit einer Lagerung und einer in der Lagerung geführten Welle, wobei entlang der Welle mindestens ein Magnetmodul mit mehreren Permanentmagneten und mindestens ein im Rahmen dieser Schrift offenbartes Spulenmodul konzentrisch angeordnet sind.

Vorzugsweise weist die elektrische Maschine mindestens ein Spulenmodul, bevorzugt mindestens ein Spulenmodul und maximal sechs Spulenmodule, besonders bevorzugt mindestens ein Spulenmodul und maximal drei Spulenmodule auf. Dabei weist die elektrische Maschine vorzugsweise ein Magnetmodul mehr auf als Spulenmodule.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Die Erfindung betrifft ferner ein Fahrzeug oder eine Werkzeugmaschine mit einer im Rahmen dieser Schrift offenbarten elektrischen Maschine.

Technische Effekte, Vorteile und/oder Erläuterungen zu diesen Merkmalen sind bereits an anderer Stelle in dieser Schrift offenbart und treffen auch auf die vorliegend beschriebenen Merkmale zu.

Weitere Ausführungsformen der Erfindung sind in den folgenden nummerierten Punkten offenbart:
1. Spulenmodul (18) für eine elektrische Maschine mit
   mindestens einer Spulenscheibe (6) mit
   mindestens einem Spulenträger (15) aus einem elektrisch isolierenden Werkstoff und
   einer Vielzahl von einzelnen Wicklungen (13) aus einem elektrisch leitfähigen Werkstoff, die um einen Mittelpunkt (14) der mindestens einen Spulenscheibe (6) umlaufend auf der mindestens einen Spulenscheibe (6) angeordnet sind, wobei
   jede der Wicklungen (13) zwei von dem Mittelpunkt (14) ausgehend radial verlaufende aktive Bereiche (16) und zwei tangential an ihrem radial äußeren und inneren Rand verlaufende passive Bereiche (17a, 17b) aufweist und
   in Draufsicht auf die Spulenscheibe (6) die aktiven Bereiche (16) unterschiedlicher Wicklungen (13) einander nicht überdecken, aber jeder passive Bereich (17a, 17b) einer der Wicklungen (13) jeweils die entsprechenden passiven Bereiche (17a, 17b) der beiden unmittelbar benachbarten Wicklungen (13) teilweise überdeckt, dadurch gekennzeichnet, dass
   in den aktiven Bereichen (16) die jeweilige Wicklung (13) im Querschnitt eine größere Dicke in axialer Richtung aufweist als in den passiven Bereichen (17a, 17b).
2. Spulenmodul (18) nach Punkt 1, dadurch gekennzeichnet, dass ein Verhältnis der Dicke der jeweiligen Wicklung (13) in den passiven Bereichen (17a, 17b) zu der Dicke in den aktiven Bereichen (16) kleiner als 1 ist.
3. Spulenmodul (18) nach Punkt 1 oder Punkt 2, dadurch gekennzeichnet, dass das Verhältnis der Dicke der jeweiligen Wicklung (13) in den passiven Bereichen (17a, 17b) zu der Dicke in den aktiven Bereichen (16) größer oder gleich als 0,3 und kleiner als 1 ist.
4. Spulenmodul (18) nach einem der vorhergehenden Punkte, dadurch gekennzeichnet, dass sich bei einem Übergang von einem aktiven Bereich (16) zu einem passiven Bereich (17a, 17b) die Form der Querschnittsfläche der jeweiligen Wicklung (13) ändert.
5. Spulenmodul (18) nach einem der vorhergehenden Punkte, dadurch gekennzeichnet, dass alle aktiven Bereiche (16) verschiedener Wicklungen (13) in Seitenansicht in einer einzelnen Ebene angeordnet sind.
6. Spulenmodul nach einem der vorangehenden Punkte, dadurch gekennzeichnet, dass die Dicke in axialer Richtung der aktiven Bereiche (16) der jeweiligen Wicklung (13) in radialer Richtung nach außen abnimmt; und
   die Breite in tangentialer Richtung der aktiven Bereiche (16) der jeweiligen Wicklung (13) in radialer Richtung nach außen zunimmt.
7. Spulenmodul (18) nach einem der vorhergehenden Punkte, dadurch gekennzeichnet, dass die Wicklungen aus einer feinen Litze aus mehreren gegeneinander elektrisch isolierten Drähten gebildet ist, die einen Drahtdurchmesser kleiner gleich 0,1 mm aufweisen.
8. Spulenmodul (18) nach einem der vorhergehenden Punkte, dadurch gekennzeichnet, dass eine Anzahl der Wicklungen (13) einem ganzzahligen Vielfachen von 3 entspricht, so dass die Wicklungen (13) einen Drei-Phasen-Betrieb ermöglichen.
9. Spulenmodul (18) nach einem der vorhergehenden Punkte, dadurch gekennzeichnet, dass sich ein innerer passiver Bereich (17a) und ein äußerer passiver Bereich (17b) einer der Wicklungen (13) in ihrer Dicke in axialer Richtung unterscheiden.
10. Spulenmodul (18) nach Punkt 9, dadurch gekennzeichnet, dass die Dicke des äußeren passiven Bereichs (17) einer der Wicklungen (13) so gewählt ist, dass ein Verhältnis der Dicke dieses Bereichs zu der Dicke der aktiven Bereiche (16) kleiner gleich 0,5 ist.
11. Elektrische Maschine mit einer Lagerung (1, 3) und einer in der Lagerung (1, 3) geführten Welle (2), wobei entlang der Welle (2) mindestens ein Magnetmodul (4) mit mehreren Permanentmagneten (5) und mindestens ein Spulenmodul (18) nach einem der vorhergehenden Punkte konzentrisch angeordnet sind.
12. Elektrische Maschine nach Punkt 11, dadurch gekennzeichnet, dass das mindestens eine Spulenmodul (18) zumindest an seiner dem Magnetmodul (4) zugewandten Seite mit einer Folie aus einem elektrisch isolierenden Werkstoff beklebt ist.
13. Elektrische Maschine nach Punkt 11 oder Punkt 12, dadurch gekennzeichnet, dass das mindestens eine Spulenmodul (18) mindestens zwei miteinander verbundene Spulenscheiben (6) und einen durch einen Hohlraum zwischen den beiden Spulenmodulen gebildeten Kühlkanal aufweist.
14. Fahrzeug oder Werkzeugmaschine mit einer elektrischen Maschine nach einem der Punkt en 11 bis 13.
15. Spulenmodul (18) für eine elektrische Maschine, insbesondere nach einem der vorangehenden Punkte, aufweisend:
   eine erste Spulenscheibe (6) mit mindestens einer Wicklung (13) aus einem elektrisch leitenden Werkstoff;
   eine zweite Spulenscheibe (6) mit mindestens einer Wicklung (13) aus einem elektrisch leitenden Werkstoff;
   wobei die erste Spulenscheibe (6) und/oder die zweite Spulenscheibe (6) eine im Wesentlichen ringförmige Ausnehmung (22) aufweisen/aufweist;
   wobei die erste Spulenscheibe (6) und die zweite Spulenscheibe (6) derart aneinander angebracht sind, dass zwischen der ersten Spulenscheibe (6) und der zweiten Spulenscheibe (6) durch die im Wesentlichen ringförmige Ausnehmungen/Ausnehmung (22) ein im Wesentlichen ringförmiger Kühlkanal (23) für ein Kühlmittel gebildet wird.
16. Spulenmodul (18) nach Punkt 15, wobei die erste Spulenscheibe (6) und/oder die zweite Spulenscheibe (6) im Bereich der Ausnehmung (22) eine Einlassöffnung (43) aufweist, um Kühlmittel in den im Wesentlichen ringförmigen Kühlkanal (23) zu leiten; und/oder
   wobei die erste Spulenscheibe (6) und/oder die zweite Spulenscheibe (6) im Bereich der Ausnehmung (22) eine Auslassöffnung (45) aufweist, um Kühlmittel von dem im Wesentlichen ringförmigen Kühlkanal (23) nach außen zu leiten.
17. Spulenmodul (18) nach Punkt 16, wobei die erste Spulenscheibe (6) und/oder die zweite Spulenscheibe (6) in der Ausnehmung (22) zwischen der Einlassöffnung (43) und der Auslassöffnung (45) einen Steg (38a, 38b) aufweist, der derart ausgebildet ist, dass der im Wesentlichen ringförmige Kühlkanal (23) zwischen der Einlassöffnung (43) und der Auslassöffnung (45) eine Trennwand aufweist.
18. Spulenmodul (18) nach einem der Punkte 15 bis 17, wobei die erste Spulenscheibe (6) und die zweite Spulenscheibe (6) jeweils aufweisen:
   mindestens einen Spulenträger (15) aus einem elektrisch isolierenden Werkstoff und
   eine Vielzahl von einzelnen Wicklungen (13) aus einem elektrisch leitfähigen Werkstoff, die um einen Mittelpunkt (14) der mindestens einen Spulenscheibe (6) umlaufend auf der mindestens einen Spulenscheibe (6) angeordnet sind, wobei
   jede der Wicklungen (13) zwei von dem Mittelpunkt (14) ausgehend radial verlaufende aktive Bereiche (16) und zwei tangential an ihrem radial äußeren und inneren Rand verlaufende passive Bereiche (17b) aufweist und
   in Draufsicht auf die Spulenscheibe (6) die aktiven Bereiche (16) unterschiedlicher Wicklungen (13) einander nicht überdecken, aber jeder passive Bereich (17a, 17b) einer der Wicklungen (13) jeweils die entsprechenden passiven Bereiche (17a, 17b) der beiden unmittelbar benachbarten Wicklungen (13) teilweise überdeckt, dadurch gekennzeichnet, dass
   in den aktiven Bereichen (16) die jeweilige Wicklung (13) im Querschnitt eine größere Dicke in axialer Richtung aufweist als in den passiven Bereichen (17a, 17b).
19. Spulenmodul (18) nach Punkt 18, wobei die Ausnehmungen/Ausnehmung (22) zumindest im Bereich der radial verlaufenden aktiven Bereiche (16) und vorzugsweise auch im Bereich der radial äußeren passiven Bereiche (17b) angeordnet sind/ist.
20. Spulenmodul (18) nach Punkt 19, wobei die Dicke in axialer Richtung der aktiven Bereiche (16) der jeweiligen Wicklung (13) der ersten und/oder zweiten Spulenscheibe in radialer Richtung nach außen abnimmt; und
   wobei die Breite in tangentialer Richtung der aktiven Bereiche (16) der jeweiligen Wicklung (13) der ersten und/oder zweiten Spulenscheibe in radialer Richtung nach außen zunimmt.
21. Spulenmodul (18) nach Punkt 20, wobei eine Tiefe (34, 34a, 34b) in axialer Richtung der Ausnehmung (22) im Bereich der aktiven Bereiche (16) in radialer Richtung nach außen zunimmt.
22. Spulenmodul (18) nach einem der Punkte 18 bis 21, wobei ein Verhältnis der Dicke der jeweiligen Wicklung (13) in den passiven Bereichen (17a, 17b) zu der Dicke in den aktiven Bereichen (16) kleiner als 1 ist.
23. Spulenmodul (18) nach einem der Punkte 18 bis 22, wobei das Verhältnis der Dicke der jeweiligen Wicklung (13) in den passiven Bereichen (17a, 17b) zu der Dicke in den aktiven Bereichen (16) größer oder gleich als 0,3 und kleiner als 1 ist.
24. Spulenmodul (18) nach einem der Punkte 18 bis 23, wobei sich bei einem Übergang von einem aktiven Bereich (16) zu einem passiven Bereich (17a, 17b) die Form der Querschnittsfläche der jeweiligen Wicklung (13) ändert.
25. Spulenmodul (18) nach einem der Punkte 18 bis 24, dadurch gekennzeichnet, dass alle aktiven Bereiche (16) verschiedener Wicklungen (13) in Seitenansicht in einer einzelnen Ebene angeordnet sind.
26. Spulenmodul (18) nach einem der Punkte 18 bis 25, dadurch gekennzeichnet, dass die Wicklungen aus einer feinen Litze aus mehreren gegeneinander elektrisch isolierten Drähten gebildet sind, die einen Drahtdurchmesser kleiner gleich 0,1 mm aufweisen.
27. Spulenmodul (18) nach einem der Punkte 18 bis 26, dadurch gekennzeichnet, dass eine Anzahl der Wicklungen (13) einem ganzzahligen Vielfachen von 3 entspricht, so dass die Wicklungen (13) einen Drei-Phasen-Betrieb ermöglichen.
28. Spulenmodul (18) nach einem der Punkte 18 bis 27, dadurch gekennzeichnet, dass sich ein innerer passiver Bereich (17a) und ein äußerer passiver Bereich (17b) einer der Wicklungen (13) in ihrer Dicke in axialer Richtung unterscheiden.
29. Spulenmodul (18) nach Punkt 28, dadurch gekennzeichnet, dass die Dicke des äußeren passiven Bereichs (17b) einer der Wicklungen (13) so gewählt ist, dass ein Verhältnis der Dicke dieses Bereichs zu der Dicke der aktiven Bereiche (16) kleiner gleich 0,5 ist.
30. Elektrische Maschine mit einer Lagerung (1, 3) und einer in der Lagerung (1, 3) geführten Welle (2), wobei entlang der Welle (2) mindestens ein Magnetmodul (4) mit mehreren Permanentmagneten (5) und mindestens ein Spulenmodul (18) nach einem der Punkte 15 bis 29 konzentrisch angeordnet sind.
31. Fahrzeug (50) oder Werkzeugmaschine (54) mit einer elektrischen Maschine nach Punkt 30.

Ausführungsbeispiele der Erfindung sind in den Zeichnungen dargestellt und werden nachfolgend anhand der nachfolgend diskutierten Figuren erläutert.

Es zeigen:
- Fig. 1: eine Explosionsansicht eines Elektromotors;
- Fig. 2: eine Draufsicht auf eine Spulenscheibe;
- Fig. 3: eine Seitenansicht eines Spulenmoduls;
- Fig. 4: eine Draufsicht und Schnittansicht einer Wicklung;
- Fig. 5: eine Draufsicht auf das Spulenmodul;
- Fig. 6: eine Schnittansicht des Spulenmoduls;
- Fig. 7: eine Draufsicht auf eine Spulenscheibe;
- Fig. 8A bis 8D: Schnittansichten durch eine Spulenscheibe
- Fig. 9A, 9B: Draufsicht und Schnittansicht einer Wicklung;
- Fig. 10: eine Schnittansicht durch ein Spulenmodul;
- Fig. 11A, 11B: Draufsichten auf eine erste und zweite Spulenscheibe;
- Fig. 12A: eine perspektivische Ansicht eines Spulenmoduls;
- Fig. 12B: eine Draufsicht auf das in Fig. 12A gezeigte Spulenmodul;
- Fig. 12C: eine perspektivische Ansicht eines Teils des in Fig. 12A gezeigten Spulenmoduls;
- Fig. 13: ein Fahrzeug; und
- Fig. 14: eine Werkzeugmaschine.

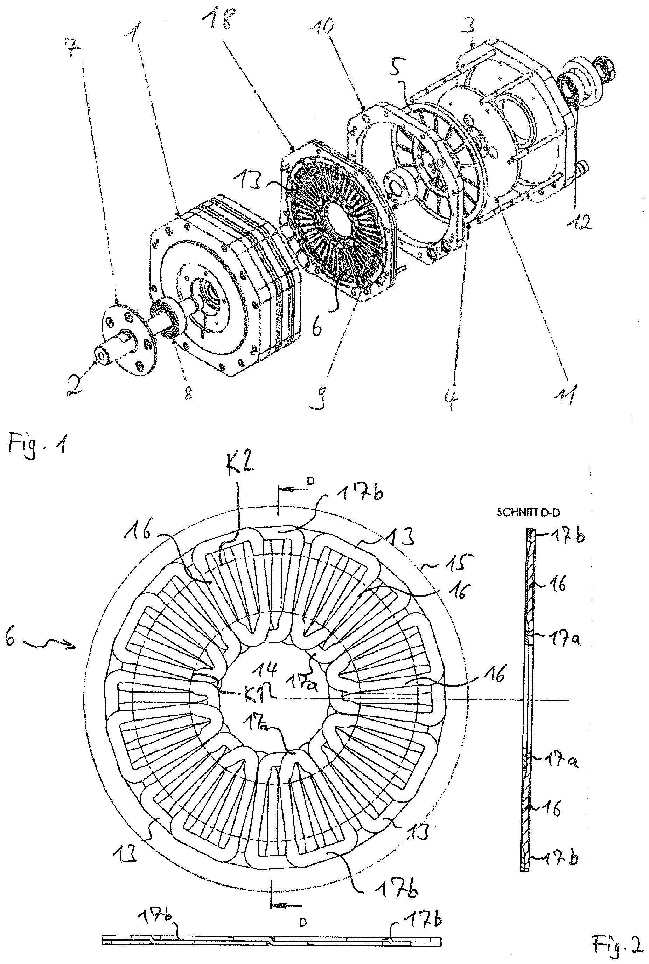

In Figur 1 ist in einer Explosionsansicht ein Elektromotor dargestellt. Ein erster Lagerschild 1 bildet zusammen mit einem zweiten Lagerschild 3 eine Lagerung für eine Motorwelle 2. Mittig in den Lagerschilden 1 und 3 wird die Motorwelle 2 geführt, die mit einem Lagerdeckel 7 und einem Festlager 8 im Bereich des ersten Lagerschilds 1 und mit einem Loslager 12 im Bereich des zweiten Lagerschild 3 versehen ist. Die Lagerschilde 1 und 3, der Lagerdeckel 7 und ein Spulenabstandshalter 10 und ein Magnetabstandshalter 9 sind in dem dargestellten Ausführungsbeispiel aus Polyamid ausgebildet, die Motorwelle 2 aus Edelstahl und das Festlager 8 sowie das Loslager 12 als Rillenkugellager aus Stahl.

Zwischen dem ersten Lagerschild 1 und dem zweiten Lagerschild 3 sind ein Spulenmodul 18 aus zwei axial hintereinander angeordneten Spulenscheiben 6 und eine Magnetscheibe bzw. Magnetmodul 4 sichtbar angeordnet, die durch den Spulenabstandshalter 10 und den Magnetabstandshalter 9 auf einer vorherbestimmten räumlichen Distanz voneinander gehalten werden. Das Spulenmodul 18 ist scheibenförmig, d. h. seine Länge und Breite sind deutlich größer als seine Dicke (die in Figur 1 in axialer Richtung gemessen wird). Unter dem Begriff "deutlich größer" soll hierbei verstanden werden, dass seine Dicke maximal 10 Prozent ihrer Länge bzw. ihrer Breite beträgt. Die Länge und die Breite sind typischerweise gleich groß. Das Spulenmodul 18 dient im dargestellten Ausführungsbeispiel als Stator, der gestapelt auf der Motorwelle 2 zu zwei als Rotoren dienenden Magnetscheiben bzw. Magnetmodulen 4 benachbart ist. Der Stator ist dabei mittig zwischen den beiden Magnetscheiben 4 angeordnet. Zusätzlich ist bei dem in Figur 1 dargestellten Ausführungsbeispiel ein Eisenrückschluss 11 zwischen der Magnetscheibe 4 und dem zweiten Lagerschild 3 vorgesehen, dieser Eisenrückschluss 11 kann aber in weiteren Ausführungsbeispielen auch entfallen oder alternativ ausgeführt sein.

Die Magnetscheiben 4 bestehen aus einem nicht magnetisierbaren, vorzugsweise elektrisch nichtleitenden Werkstoff wie Aluminium und sind auf der Motorwelle 2 befestigt, die in den Lagern 8 und 12 der Lagerschilde 1 und 3 montiert ist. Ebenfalls auf der Motorwelle 2 montiert ist der Magnetabstandshalter 9, der einen Luftspalt zwischen den Magnetscheiben 4 herstellt, in dem das Spulenmodul 18 angeordnet ist. Auf der Magnetscheibe 4 sind Permanentmagnete 5 radial umlaufend in alternierender Ausrichtung, also immer abwechselnd mit Nordpol und Südpol in Richtung des Stators, d.h. in axialer Richtung, weisend, angeordnet. Eine Anzahl der Permanentmagnete 5 ist hierbei stets geradzahlig. Vorzugsweise entspricht die Anzahl der Permanentmagnete 5 gerade dem Doppelten einer Anzahl an Wicklungen pro Phase.

In dem in Figur 1 gezeigten Ausführungsbeispiel kann ein einzelnes Spulenmodul 18 aus zwei Spulenscheiben 6 gefertigt sein, es kann aber auch vorgesehen sein, drei oder mehr dieser Spulenscheiben 6 miteinander zu verbinden und somit das Spulenmodul 18 zu erhalten. In einem sich dabei ausbildenden Hohlraum zwischen den einzelnen Spulenscheiben 6 kann während des Betriebs ein Kühlmedium geleitet werden. Den einfachsten aber dabei gleichzeitig effizient betreibbaren Aufbau des Motors bilden ein einzelnes Spulenmodul 18 mit einer einzigen Spulenscheibe 6 und zwei Magnetscheiben 4, es kann aber auch vorgesehen sein, entsprechend mehr Spulenmodule 18 und Magnetscheiben 4 vorzusehen, wobei eine Anzahl der Magnetscheiben 4 vorzugsweise um eins größer ist als eine Anzahl der Spulenmodule 18. Vorzüge einer entsprechenden modularen Bauweise ergeben sich gerade bei entsprechender Wellen- und Lagerauslegung durch die variable Anzahl an verbauten Spulenmodulen 18 und Magnetscheiben 4. Neben einer Kombination der beiden Module Spulenmodul 18 und Magnetscheibe 4 führt die Variation der einzelnen Module zu weiterer Flexibilität in der Motorauslegung. Das Spulenmodul 18 und die Magnetscheibe 4 lassen sich unabhängig voneinander anpassen, z. B. kann ausschließlich eine Anpassung der Permanentmagnete 5 nötig sein, während der restliche Aufbau unverändert bleibt.

In Figur 2 ist in einer Draufsicht, also entlang einer Normalenrichtung, die sowohl senkrecht auf der Länge als auch senkrecht auf der Breite des Spulenmoduls 18 steht, ein die Spulenscheibe 6 bildender Spulenträger 15 mit darauf angeordneten Wicklungen 13 gezeigt. Wiederkehrende Merkmale sind in dieser Figur wie auch in den folgenden Figuren mit identischen Bezugszeichen versehen. Der Spulenträger 15 ist in Draufsicht rund, d. h. die Länge entspricht gerade größenmäßig der Breite, und aus einem elektrisch isolierenden Werkstoff gefertigt. Auf dem Spulenträger 15 sind radial umlaufend um einen Mittelpunkt 14 des Spulenträgers 15 mehrere einzelne Wicklungen 13 angeordnet, wobei jede der Wicklungen 13 von unmittelbar benachbarten Wicklungen 13 elektrisch isoliert ist. Im Mittelpunkt 14 schneidet die Rotationsachse der elektrischen Maschine den Spulenträger 15. In dem in Figur 2 wiedergegebenen Ausführungsbeispiel sind diese Wicklungen 13 dreiphasig gewickelt. Jede Wicklung besteht aus mehreren Windungen Litze. Dies führt dazu, dass jeweils jede dritte Wicklung 13 in ihrer Anordnung im Verbund gleich ausgestaltet ist. Diese Wicklungen 13 sind auch hinsichtlich ihrer Tiefenausrichtung und -anordnung gleich positioniert: eine erste Phase wird also durch die in Figur 1 als oberste Lage sichtbaren Wicklungen 13, eine zweite Phase durch die von oben gesehen halb abgedeckten Wicklungen 13 und eine dritte Phase durch die von oben gesehen ganz abgedeckten Wicklungen 13 gebildet..

Jede der Wicklungen 13 weist zwei von dem Mittelpunkt 14 der Spulenscheibe 6 ausgehende radial verlaufende aktive Bereiche 16, die zum Drehmoment des Motors beitragen, und zwei ungefähr tangential an ihrem radial äußeren Rand und inneren Rand verlaufende passive Bereiche 17a und 17b, d.h. einen radial inneren passiven Bereich 17a und einen radial äußeren passiven Bereich 17b, auf. Die inneren passiven Bereiche 17a, die also näher an dem Mittelpunkt 14 als die äußeren passiven Bereiche 17b angeordnet sind, sind hierbei in ihrer Länge kürzer als die äußeren passiven Bereiche 17b. Die aktiven Bereiche 16 unterschiedlicher Wicklungen 13 überlappen einander in Draufsicht, d. h. in einer Sicht entlang der Motorwelle 2 nicht, jeder der inneren und äußeren passiven Bereiche 17a und 17b einer der Wicklungen 13 überdeckt jeweils die entsprechenden passiven Bereiche 17a und 17b der beiden unmittelbar benachbarten Wicklungen 13 teilweise.

Die Kreise K1 und K2 stellen hierbei die radial inneren und radial äußeren Grenzen der aktiven Bereiche 16 dar. Das heißt, dass die aktiven Bereiche 16 sich vom inneren Kreis K1 zum äußeren Kreis K2 erstrecken. Die Bereiche der Wicklungen, die außerhalb dieser Kreise K1 und K2 liegen, sind den passiven Bereichen 17a und 17b zuzuordnen.

Bei dem in Figur 2 gezeigten Ausführungsbeispiel ist jede der drei Phasen aus einzelnen Zähnen, d. h. einzelnen Wicklungen 13 aufgebaut, die einzelnen Wicklungen 13 sind hierbei mehrfach umlaufend gewickelt, es kann aber auch nur ein einzelner Umlauf vorgesehen sein. Eine Besonderheit liegt darin, dass die unterschiedlichen Phasen in den speichenartig aufgebauten aktiven Bereichen 16 in einer einzigen Ebene nebeneinanderliegen. In Figur 2 sind diese aktiven Bereiche 16 durch die beiden Kreislinien über den Wicklungen 13 kenntlich gemacht. Die aktiven Bereiche 16 sind daher auch in ihrer Form und ihren Abmessungen jeweils identisch, während die passiven Bereiche 17a und 17b sowohl hinsichtlich Form, als auch hinsichtlich Abmessungen unterschiedlich aufgebaut sind.

Die passiven Bereiche 17a und 17b weisen Überlappungen von immer zwei benachbarten Zähnen auf, wodurch die einzelnen Phasen einen Ebenenwechsel vollziehen müssen. Ohne Querschnittswechsel verdoppelt sich bei direkter Überlappung die Dicke der Spulenscheibe 6 im Bereich der passiven Bereiche 17a und 17b in axialer Richtung. Eine daraus resultierende Erhöhung eines axialen Abstands der Permanentmagnete 5 kann durch einen Querschnittswechsel, also einen Wechsel im Dicken-zu-Breiten-Verhältnis bzw. Höhen-zu-Breiten-Verhältnis, der Wicklungen 13 beeinflusst werden. Ein Verhältnis der Dicke der jeweiligen Wicklung 13 in den aktiven Bereichen 16 zu der Dicke in den passiven Bereichen 17a und 17b beträgt in dem dargestellten Ausführungsbeispiel gerade 2. Hierbei kann vereinfacht von einer auf 1 normierten Dicke bzw. Höhe der aktiven Bereiche 16 in axialer Richtung ausgegangen werden (die in dem dargestellten Ausführungsbeispiel alle hinsichtlich ihrer Dicke identisch ausgestaltet sind), wohingegen die passiven Bereiche 17a und 17b (die in dem dargestellten Ausführungsbeispiel ebenfalls alle hinsichtlich ihrer Dicke identisch ausgestaltet sind) eine bezogen auf diese normierte Dicke geringere Dicke von 0,75 aufweisen, aber in seitlicher Ansicht diese Dicken der passiven Bereiche 17a und 17b aufgrund ihrer fluchtend hintereinander befindlichen Anordnung sich auf lediglich 1,5 summieren. Eine derartige Anordnung ist beispielsweise in der Schnittansicht in Figur 2 auf der rechten Seite dargestellt. Während die passiven Bereiche 17a und 17b für sich betrachtet jeweils eine geringere Dicke bzw. Höhe als die aktiven Bereiche 16 aufweisen, sind in der übereinanderliegenden Anordnung der Wicklungen 13 durch die Überlappungen die passiven Bereiche 17 dicker erscheinen und sich im Mittelteil zusätzlicher Bauraum ergibt, in dem die Permanentmagnete 5 näher an die aktiven Bereiche 16 geführt werden können. Im unteren Teil von Figur 2 wird schematisch ein Verlauf der äußeren passiven Bereiche 17b wiedergegeben. Hierbei wird deutlich, dass jede dritte Wicklung 13 in ihrem passiven Bereich 17b einen Ebenenwechsel vollzieht. Eine Anzahl der Wicklungen 13 entspricht in dem dargestellten Ausführungsbeispiel einem ganzzahligen Vielfachen von drei, so dass die Wicklungen 13 einen Drei-Phasen-Betrieb ermöglichen. Es werden somit also insgesamt drei Stränge unterschiedlicher Phasen aus den Wicklungen 13 gebildet, wobei alle aktiven Bereiche 16 der Wicklungen 13 in Seitenansicht in einer einzigen Ebene liegen, während die passiven Bereiche 17a und 17b auf zwei Ebenen verteilt sind. Zwei Phasen sind jeweils in einer Ebene und eine dritte Phase vollzieht einen zusätzlichen Ebenenwechsel.

Zwei Phasen können beispielsweise statt in axialer Richtung in radialer Richtung durch einen entsprechenden Querschnittswechsel gestapelt bzw. nebeneinandergelegt werden, was zu einer Vergrößerung der Spulenscheibe 6 in radialer Richtung führt. Bei einer Verdopplung der Höhe bzw. Dicke der passiven Bereiche 17a und 17b in radialer Richtung wird eine Dopplung der beiden Phasen in axialer Richtung kompensiert und es ergibt sich eine Ebene für die gesamte Spulenscheibe 6. Es ergibt sich somit ein dreiphasig gewickeltes eisenloses Spulenmodul 18 mit anpassbarem Querschnittswechsel der Wicklungen 13 und somit anpassbarer axialer Höhe des Spulenmoduls 18 für die Verwendung in eisenlosen Axialflusselektromotoren.

Bei dem in Figur 2 gezeigten Ausführungsbeispiel bilden somit jeweils acht kreisförmig angeordnete und elektrisch seriell verschaltete Wicklungen 13 eine Spule. Drei dieser Spulen werden entsprechend der drei Phasen des elektrischen Stroms, mit dem Spulenträger 15 in der Spulenscheibe 6 und dem Spulenmodul 18 zusammengefasst.

In weiteren Ausführungsbeispielen ist es auch möglich, zwei oder mehr Spulenscheiben 6 miteinander zu verkleben oder anderweitig miteinander stoffschlüssig oder kraftschlüssig zu verbinden, um so das Spulenmodul 18 zu erhalten. Eine Größe des Hohlraums zwischen den aktiven Bereichen 16 kann durch eine Querschnittsänderung der durch die Wicklungen 13 gebildeten Spulenstruktur angepasst werden.

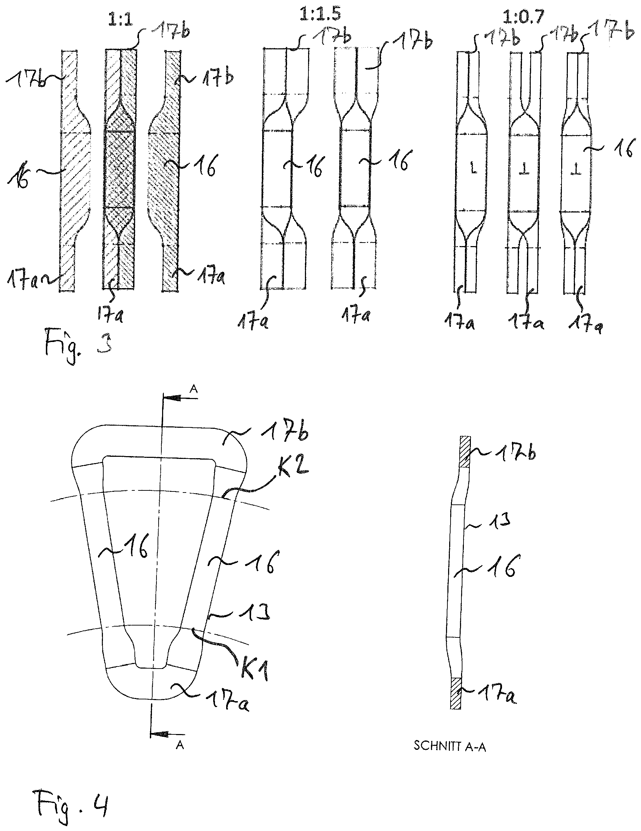

Figur 3 zeigt in einer schematischen Seitenansicht entsprechende Querschnittswechsel auf der Spulenscheibe 6. In Figur 3 ist links unter dem Verhältnis 1:1 eine Wicklung 13 schematisch dargestellt, bei der die passiven Bereiche 17a und 17b nur halb so dick sind wie die aktiven Bereiche 16. In einer einzigen Spulenscheibe 6 überlappen sich stets nur die passiven Bereiche 17a und 17b teilweise (und auch nie vollständig), nie aber die aktiven Bereiche 16. Die dickeren aktiven Bereiche 16 sind in derselben Ebene in der linken Ansicht von Figur 3 hintereinander angeordnet, während die passiven Bereiche 17a und 17b durch den Querschnittswechsel nur halb so dick sind und durch die unterschiedlichen Ebenen ein Gesamtverhältnis zwischen aktiven Bereichen 16 und passiven Bereichen 17a und 17b von 1:1 ergeben, d.h. dass die Summe der Dicken der passiven Bereiche 17a und 17b gerade der Dicke der aktiven Bereiche 16 im Querschnitt entspricht.

Bei der mittleren Zeichnung in Figur 3 mit dem Verhältnis 1:1,5 ist die Spulenscheibe 6 wiederum im Querschnitt dargestellt. Die passiven Bereiche 17 sind in Summe in der gezeigten Querschnittsansicht nun infolge der Überlappung gerade 1,5-mal dicker als die aktiven Bereiche 16, die wegen ihrer Anordnung hintereinander in seitlicher Ansicht weniger Bauraum benötigen. Die beiden unter 1:1,5 gezeigten Ausführungsbeispiele zeigen unterschiedliche Ebenenwechsel, wodurch im ersten Ausführungsbeispiel (links) ein Hohlraum rechts des aktiven Bereichs 16 und im zweiten Ausführungsbeispiel (rechts) zwei Hohlräume beidseitig des aktiven Bereichs 16 entstehen. In derartig ausgebildete Hohlräume können die Magnete der Magnetanordnung eingeführt werden und somit der axiale Abstand bzw. Spalt zwischen den aktiven Bereichen 16 und den Permanentmagneten 5 verkleinert werden (auch wenn dieser nicht vollständig verschwinden kann). Der zur Verfügung stehende Bauraum wird also effizienter ausgenutzt. Alternativ können die sich ausbildenden Hohlräume auch für die Kühlung verwendet werden.

Auf der rechten Seite von Figur 3 ist schließlich noch ein Verhältnis von 1:0,7 dargestellt. Die drei gezeigten Ausführungsbeispiele zeigen eine Ausbildung von Hohlräumen durch entsprechende Querschnitts- und Ebenenwechsel in den passiven Bereichen 17a und 17b. Auch diese Hohlräume können für die Kühlung verwendet werden. Bei den beschriebenen Ausführungsbeispielen werden vorzugsweise für die Wicklungen 13 flexible Litzen aus Kupfer oder Aluminium mit einem Durchmesser von kleiner 2 mm, nämlich 1,2 mm im dargestellten Ausführungsbeispiel, verwendet, die aus mehreren zueinander elektrisch isolierten Einzeldrähten mit einem Durchmesser von kleiner 0,2 mm, typischerweise aber 0,05 mm im dargestellten Ausführungsbeispiel bestehen.

Ein zwischen den als Stegen ausgebildeten aktiven Bereichen 16 der das Spulenmodul 18 bildenden Spulenscheiben 6 gebildeter Hohlraum kann für die Durchströmung mit einem Kühlmedium genutzt werden. Zur hydraulischen Abdichtung werden in diesem Fall die Spulenscheiben 6 an einer der Magnetscheibe 4 zugewandten Seite mit einer fluiddichten Folie aus einem elektrisch nicht leitfähigen Werkstoff beklebt, so dass das aus mehreren Spulenscheiben 6 gebildete Spulenmodul 18 nach außen hin abgedichtet ist. Die Hohlräume können hierbei rechteckig, dreieckig oder trapezförmig bzw. in komplexen Formen ausgestaltet sein.

In Figur 4 ist in der linken Abbildung in einer Draufsicht eine der Wicklungen 13 entsprechend der Darstellung in Figur 2 wiedergegeben. Aus der auf der rechten Seite von Figur 4 gezeigten Schnittansicht durch die Wicklung 13 ist ersichtlich, dass in den aktiven Bereichen 16 die Dicke größer ist als in den passiven Bereichen 17a und 17b.

Die Kreise K1 und K2 stellen wie in Fig. 2 die Ausdehnung der aktiven Bereiche 16 dar.

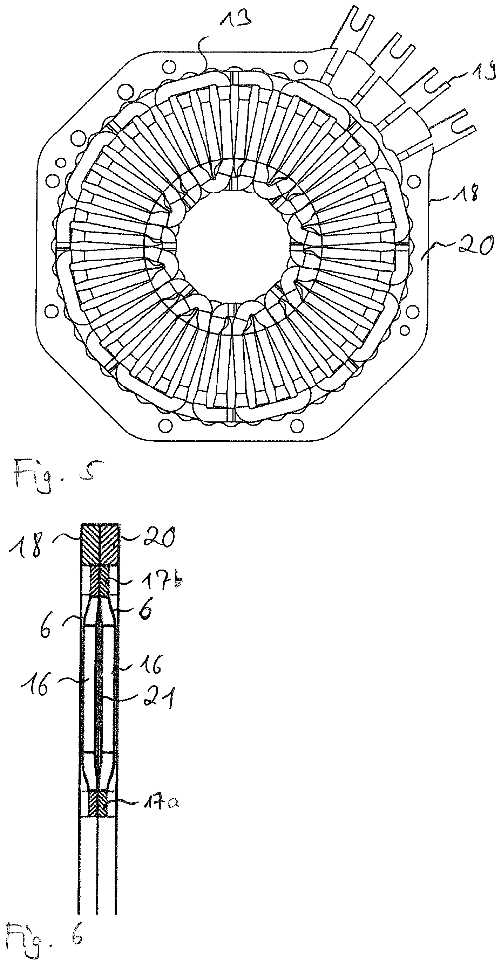

Figur 5 zeigt in einer Figur 2 entsprechenden Draufsicht ein Spulenmodul 18, bei dem zwei Spulenscheiben 6 in axialer Richtung hintereinander angeordnet und jeweils in einem den Spulenträger 15 ergänzenden Spulenträgerring 20 eingebettet sind, wobei von den Wicklungen 13 elektrische Kontakte 19 aus dem Spulenträgerring 20 herausgeführt sind. Der Spulenträgerring 20 ist in diesem Ausführungsbeispiel aus einem Glasfaser-Epoxid-Harz-Gewebe gefertigt.

In Figur 6 ist in einer Schnittansicht da Spulenmodul 18 gezeigt, wobei die beiden miteinander kombinierten Spulenscheiben 6 derart angeordnet sind, dass zwischen den aktiven Bereichen 16 beider Spulenscheiben 6 ein Hohlraum 21 ausgebildet ist. Da die Spulenscheiben fluiddicht mittels einer Folie abgedichtet sind, kann in diesen Hohlraum 21 ein Kühlmedium eingebracht werden.

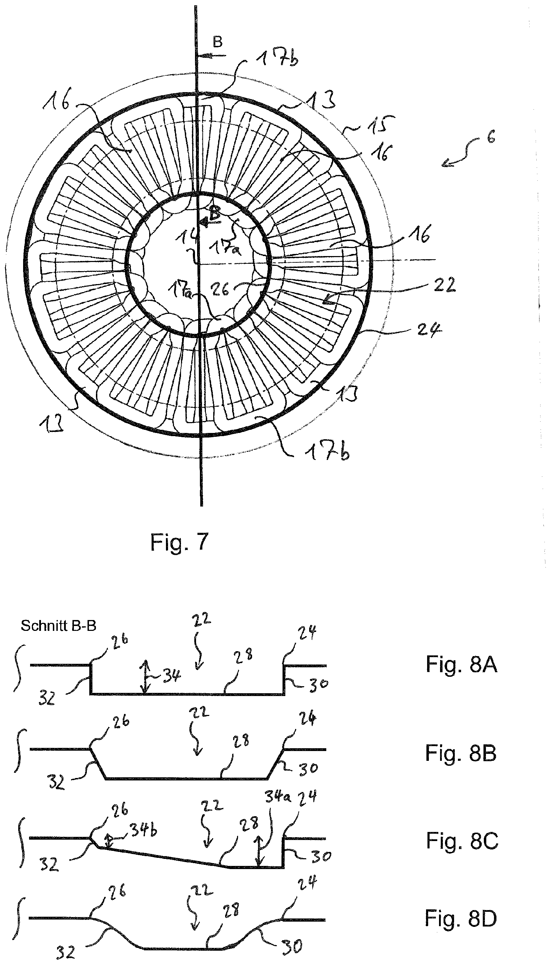

Figur 7 zeigt eine innere Seite einer Spulenscheibe 6 eines Spulenmoduls für eine elektrische Maschine, anhand derer die Kühlgeometrie näher erläutert wird. Die Spulenscheibe 5 weist eine Spulenträger 15 aus einem elektrisch isolierenden Werkstoff sowie mindestens eine Wicklung 13 aus einem elektrisch leitfähigen Werkstoff auf, die um einen Mittelpunkt 14 der mindestens einen Spulenscheibe 6 umlaufend auf oder in der Spulenscheibe 6 angeordnet ist.

Vorteilhafterweise handelt es sich bei den Wicklungen 13 um die im Rahmen dieser Schrift näher beschriebenen Wicklungen mit aktiven Bereichen 16 und passiven Bereichen 17a, 17b, wobei die aktiven Bereiche 16 unterschiedlicher Wicklungen 13 einander nicht überdecken, aber jeder passive Bereich 17a, 17b einer der Wicklungen 13 jeweils die entsprechenden passiven Bereiche 17a, 17b der beiden unmittelbar benachbarten Wicklungen 13 teilweise überdeckt, und in den aktiven Bereichen 16 die jeweilige Wicklung 13 im Querschnitt eine größere Dicke in axialer Richtung aufweist als in den passiven Bereichen 17. Bei der Wicklung 13 kann es sich jedoch auch um eine andere Art der Wicklung handeln. Die mindestens eine Wicklung 13 kann beispielsweise auch in Form mindestens einer Wicklung, die mäanderförmig um den Mittelpunkt 14 angeordnet ist, ausgebildet sein.

Die Spulenscheibe 6 weist ferner eine im Wesentlichen ringförmige Ausnehmung 22 auf. Die Ausnehmung 22 befindet sich auf der inneren Seite der Spulenscheibe 6, d.h. der Seite, die im Spulenmodul der anderen Spulescheibe zugewandt ist, so dass die Ausnehmung 22 innerhalb der beiden Spulenscheiben eingeschlossen ist und so den Kühlkanal bildet. Die Ausnehmung 22 weist eine äußere Kante 24 und eine innere Kante 26 auf, ausgehend von welchen die Ausnehmung 22 gegenüber der restlichen Fläche der Spulenscheibe 6 vertieft ist. Das heißt, dass die innere Seite der Spulenscheibe 6 abgesehen von der Ausnehmung 22 im Wesentlichen in einer Ebene liegt, so dass die Kanten 24 und 26 jeweils den Übergang von der ebenen inneren Seite der Spulenscheibe 6 zur Ausnehmung 22 darstellen. Obwohl die Ausnehmung 22 in diesem Ausführungsbeispiel exakt ringförmig gezeichnet ist, muss es sich erfindungsgemäß nicht um eine exakte Ringform handeln. Die Ausnehmung 22 erstreckt sich im Wesentlichen um den Mittelpunkt 14 und befindet sich nicht im Mittelpunkt 14 selbst. Jedoch kann die Ausnehmung 22 einen an anderer Stelle dieser Schrift näher erläuterten Steg oder mehrere Stege aufweisen, der bzw. die die Ausnehmung 22 unterbrechen. Weiterhin müssen die innere Kante 26 und/oder äußere Kante 24 der Ausnehmung 22 nicht exakt kreisförmig sein und können beispielsweise eine polygonale oder unregelmäßige Form haben.

Die innere Kante 26 der Ausnehmung 22 befindet sich im Bereich des Übergangs von den aktiven Bereichen 16 zu den inneren passiven Bereichen 17a der Wicklungen 13. Die äußere Kante 24 der Ausnehmung 22 befindet sich am radial äußersten Bereich der äußeren passiven Bereiche 17b der Wicklungen 13. Diese Anordnung der Ausnehmung 22 kann vorteilhaft sein, da die radial inneren passiven Bereiche 17a aufgrund des begrenzten Raums dicker als die radial äußeren passiven Bereiche 17b sind und die inneren passiven Bereiche 17a unmittelbar benachbarter Wicklungen 13 sich im Gegensatz zu den aktiven Bereichen 16 jeweils überlappen, so dass die summierte Dicke in axialer Richtung der radial inneren passiven Bereiche 17a größer ist als die Dicke der aktiven Bereiche 16. Daher steht im Bereich der aktiven Bereiche 16 und gegebenenfalls im Bereich der äußeren passiven Bereichen 17b Raum für die Ausnehmung 22 zur Verfügung. Alternativ kann die äußere Kante 24 der Ausnehmung 22 auch am Übergang zwischen aktiven Bereichen 16 und radial äußeren passiven Bereichen 17b liegen.

Es ist zu erwähnen, dass es bei möglichst optimaler Bauweise der elektrischen Maschine von Vorteil sein kann, die Ausnehmung 22 wie beschrieben anzuordnen. Jedoch kann die Ausnehmung 22 auch anders angeordnet werden, z.B. wenn für den Platzbedarf, Leistungsfähigkeit und/oder den Wirkungsgrad Kompromisse eingegangen werden.

Die Ausnehmung 22 kann unterschiedliche Querschnitte haben, wie es in Figuren 8A bis 8D beispielhaft dargestellt ist. Die Figuren 8A bis 8D zeigen jeweils eine Schnittansicht auf die in Figur 7 gezeigte Ebene B-B.

Fig. 8A zeigt eine Ausnehmung 22 mit einem rechteckigen Querschnitt. Die Ausnehmung 22 weist eine äußere Seitenfläche 30, eine Bodenfläche 28 und eine innere Seitenfläche 32 auf, wobei die innere und äußere Seitenfläche 30, 32 jeweils orthogonal zur Bodenfläche 28 sind und die Bodenfläche 28 parallel zur inneren Seite der Spulenscheibe ist. Die Ausnehmung 22 hat somit entlang der radialen Richtung von innen nach außen, d.h. von der inneren Kante 26 zur äußeren Kante 24, eine konstante Tiefe 34.

Fig. 8B zeigt eine Ausnehmung 22 mit einem trapezförmigen Querschnitt. Im Gegensatz zu dem in Fig. 8A gezeigten Querschnitt sind die Seitenwände 30 und 32 nicht orthogonal zur Bodenfläche 28, sondern zur Bodenfläche 28 geneigt, so dass die Tiefe der Ausnehmung 22 im Bereich der Seitenwände 30, 32 zur Bodenfläche 28 hin stetig zunimmt. Im Bereich der Bodenfläche 28 kann die Höhe wie bezüglich Fig. 8A beschrieben wiederum konstant sein.

Fig. 8C zeigt eine Ausnehmung 22 mit einer in radialer Richtung von innen nach außen, d.h. von der inneren Kante 26 zur äußeren Kante 24, zunehmenden Tiefe 34a, 34b. Das heißt, die Bodenfläche 28 ist zumindest teilweise nicht parallel zur inneren Seite der Spulenscheibe. So kann ein Teil der Bodenfläche 28, beispielsweise ein radial äußerer Teil der Bodenfläche 28, parallel zur inneren Seite der Spulenscheibe sein, wohingegen ein anderer Teil der Bodenfläche 28, beispielsweise ein radial innerer Teil der Bodenfläche 28, derart geneigt sein kann, so dass die Tiefe 34a, 34b der Ausnehmung 22 von radial innen nach radial außen zunimmt. Weiterhin können die innere Seitenfläche 32 und die äußere Seitenfläche 30 jeweils orthogonal oder angewinkelt zur inneren Seite der Spulenscheibe sein. Im vorliegenden Beispiel ist die äußere Seitenfläche 30 orthogonal zur inneren Seite der Spulescheibe, wohingegen die innere Seitenfläche 32 dazu angewinkelt ist.

Die Ausnehmung 22 kann derart in der Spulenscheibe angeordnet sein, dass der oben beschriebene parallel zur inneren Seite der Spulenscheibe liegende Teil der Bodenfläche 28 im Bereich der radial äußeren passiven Bereiche 17b der Wicklungen inklusive deren radial verlaufenden Bereiche, in denen ein Querschnittswechsel erfolgt liegt. Der geneigte Teil der Bodenfläche 28 liegt im Bereich der aufgefächerten aktiven Bereiche der Wicklungen. Die innere Seitenfläche 32 liegt im Bereich der inneren passiven Bereiche der Wicklungen, in denen ein Querschnittswechsel erfolgt.

Dieser in Fig. 8C gezeigte Querschnitt der Ausnehmung 22 kann insbesondere dann vorliegen, wenn die aktiven Bereiche der Wicklungen, wie in dieser Schrift erläutert, "aufgefächert" sind. Diese Form der Ausnehmung wird auch "V-Cooling" Geometrie genannt.

Figur 8D zeigt einen Querschnitt einer Ausnehmung 22, bei der die Übergänge von der inneren Seite der Spulenscheibe zur inneren Seitenfläche 32, zur Bodenfläche 28 und zur äußeren Seitenfläche 30 stetig und/oder kontinuierlich sind. Solche stetige und/oder kontinuierliche Übergänge sind auch für die in Fig. 8A bis 8C gezeigten Querschnitte möglich.

Die Ausnehmung 22 kann auch eine Querschnittsform haben, die sich aus einer Kombination der in Fig. 8A bis 8D gezeigten Querschnitte ergibt.

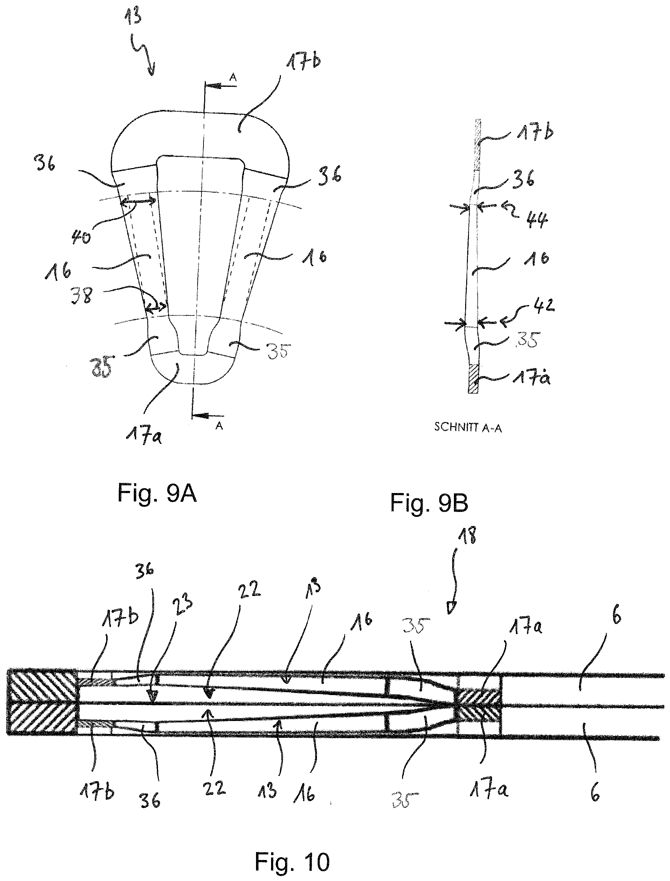

Figuren 9A und 9B zeigt eine Draufsicht einer Wicklung 13, anhand derer die im Rahmen der Schrift offenbarte "Auffächerung" näher erläutert wird. Die Wicklung weist zwei radial verlaufende aktive Bereiche 16 sowie einen inneren tangential verlaufenden passiven Bereich 17a und einen äußeren tangential verlaufenden passiven Bereich 17b, die jeweils die zwei aktiven Bereiche 16 miteinander verbinden. Wie im Rahmen dieser Schrift offenbart, ist die Dicke in axialer Richtung der Wicklung 13 im Bereich der aktiven Bereiche 16 größer als die Dicke in axialer Richtung der passiven Bereiche 17a, 17b. Angrenzend zu den aktiven Bereichen 16 weisen die passiven Bereiche 17a, 17b kurze, radiale Bereiche 35 und 36 auf, in denen Querschnittswechsel der jeweiligen Wicklung 13 erfolgen, die jeweils auch mit einem Ebenenwechsel einhergehen können. Solche Übergangsbereiche können sich auch in den aktiven Bereichen 16 befinden.

Die aktiven Bereiche 16 haben eine aufgefächerte Geometrie. Das heißt, in radialer Richtung von innen nach außen nimmt die Breite in tangentialer Richtung der Wicklung 13 in den aktiven Bereichen 16 zu, d.h. die Breite in tangentialer Richtung der Wicklung 13 in den aktiven Bereichen 16 hat am radial innersten Punkt, der an den inneren Querschnittswechsel 35 angrenzt, einen Minimalwert 38 und am radial äußersten Punkt, der am äußeren Querschnittswechsel 36 angrenzt, einen Maximalwert 40. Die Breite der Wicklung in den Querschnittswechseln 35, 36 kann sich innerhalb und/oder außerhalb dieser Werte befinden. Die Dicke in axialer Richtung der Wicklung in den aktiven Bereichen 16 nimmt in radialer Richtung von innen nach außen ab, d.h. nimmt am radial innersten Punkt, der an den inneren Querschnittswechsel 35 angrenzt, einen Maximalwert 42 und am radial äußersten Punkt, der am äu-ßeren Querschnittswechsel 36 angrenzt, einen Minimalwert 44 ein. In den Querschnittswechseln 35, 36 kann die Dicke der Wicklung innerhalb und/oder außerhalb dieser Werte liegen. Die Querschnittsfläche der Wicklung 13 in den aktiven Bereichen 16 bleibt entlang der radialen Richtung dabei im Wesentlichen konstant.

Diese Form der Wicklung mit den aufgefächerten aktiven Bereichen 16 kann vorteilhaft mit der in Fig. 8C gezeigten Ausnehmung, d.h. der "V-Cooling Geometrie", kombiniert werden. Dies ist beispielsweise in Figur 10 gezeigt.

Figur 10 zeigt eine Schnittansicht durch ein Spulenmodul 18. Das Spulenmodul weist erste und zweite Spulenscheiben 6 auf, die jeweils Wicklungen 13 aufweisen, die die in Fig. 9A und 9B gezeigte aufgefächerte Geometrie haben. Die erste und zweite Spulenscheibe 6 weisen jeweils eine im Wesentlichen ringförmige Ausnehmung 22 auf, die sich jeweils von den inneren Querschnittswechsel 35 der Wicklungen 13 bis zu den äußeren passiven Bereichen 17b der Wicklungen erstrecken. Zwischen den Querschnittswechseln 35 und 36 nimmt die Tiefe der Ausnehmungen 22 von radial innen nach radial außen kontinuierlich zu, so dass die Ausnehmungen die sogenannte "V-Cooling" Geometrie aufweisen.

Vorliegend weisen sowohl die erste als auch die zweite Spulenscheibe 6 eine Ausnehmung 22 auf, die im zusammengesetzten Zustand des Spulenmoduls 18 einander genau gegenüberliegen und so den Kühlkanal 23 eingrenzen und bilden.

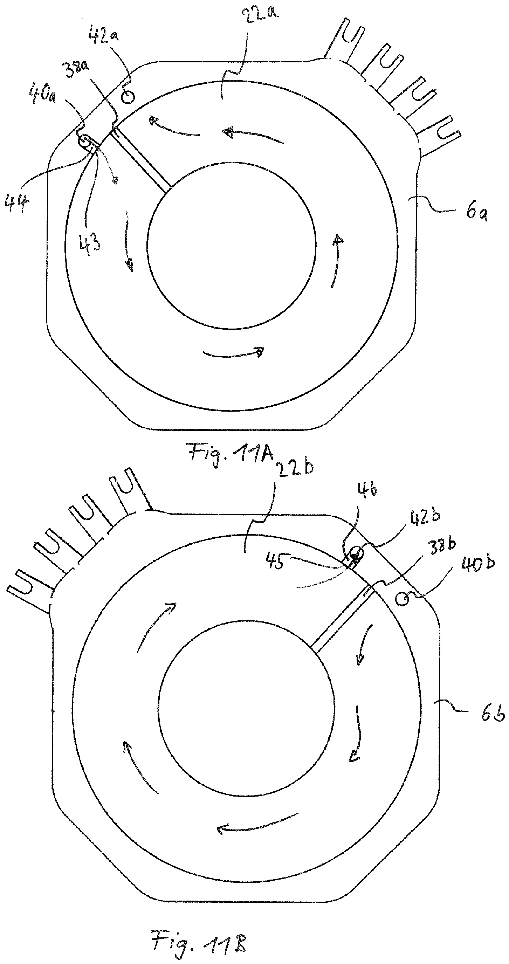

Die Figuren 11A und 11B zeigen jeweils eine Draufsicht auf die innere Seite einer ersten Spulenscheibe 6a und einer zweiten Spulenscheibe 6b, die vorgesehen sind, um zu einem Spulenmodul zusammengebaut zu werden. Der Übersichtlichkeit halber sind die Wicklungen in diesen Figuren nicht dargestellt. Die erste Spulenscheibe 6a und die zweite Spulenscheibe 6b weisen jeweils eine im Wesentlichen ringförmige Ausnehmung 22a, 22b auf. Weiterhin sind in der Ausnehmung 22a ein Steg 38a und in der Ausnehmung ein Steg 38b ausgebildet, dessen Oberseite jeweils in der gleichen Ebene liegt, wie die restliche innere Seite der Spulenscheibe 6a, 6b (d.h. absehen von der Ausnehmung 22a, 22b).

Die erste Spulenscheibe 6a weist ferner ein Einlassloch 40a, einen Einlasskanal 44 und ein Auslassloch 42a auf. Der Einlasskanal 44 bildet in der Seitenfläche der Ausnehmung 22a eine Einlassöffnung 43. Die zweite Spulenscheibe 6b weist ein Einlassloch 40b, ein Auslassloch 42b und einen Auslasskanal 46 auf, der in der Seitenfläche der Ausnehmung 22b eine Auslassöffnung 45 bildet.

Durch diese Anordnung kann das Kühlmittel im zusammengebauten Zustand des Spulenmoduls durch das Einlassloch 40a, b, den Einlasskanal 44, die Einlassöffnung 43 in den durch die Ausnehmungen 22a, 22b gebildeten Kühlmittelkanal und anschließend durch die Auslassöffnung 45 in den Auslasskanal 46 und das Auslassloch 42a, b strömen, wie es mittels Pfeilen sichtbar gemacht wurde.

Die elektrische Maschine weist typischerweise mehrere solche Spulenmodule auf, die über Spulenabstandshalter miteinander verbunden sind. Die Spulenabstandshalter weisen entsprechende Einlass- und Auslasslöcher auf, so dass im zusammengebauten Zustand alle Einlasslöcher auf einer Linie liegen und alle Auslasslöcher auf einer Linie liegen. Im Spulenmodul oder im Abstandshalter, das an einem axialen Ende der elektrischen Maschine liegt, können dabei die Einlass- und Auslasslöcher weggelassen werden. Durch die Einlass- und Auslasslöcher im Spulenmodul oder Abstandshalter, das am gegenüberliegenden axialen Ende der elektrischen Maschine liegt, kann das Kühlmittel zu- und abgeführt werden.

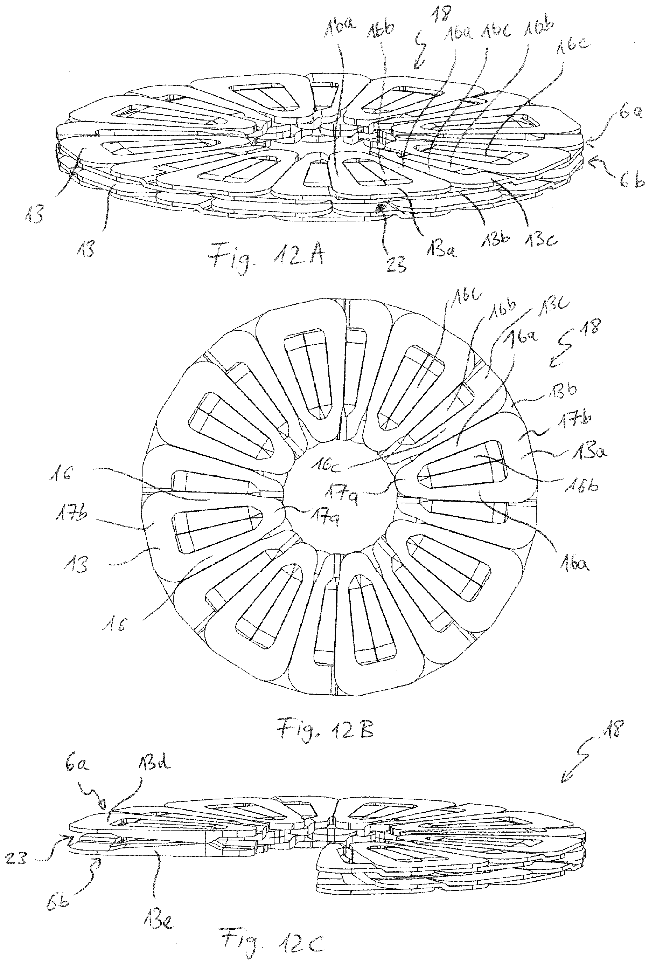

Die Figuren 12A, 12B und 12C zeigen ein Spulenmodul, anhand dessen die hierin offenbarte "Auffächerung" der aktiven Bereiche sowie das "V-Cooling" erläutert sind.

Fig. 12A zeigt dabei eine perspektivische Ansicht auf das Spulenmodul 18. Das Spulenmodul umfasst eine erste Spulenscheibe 6a und eine zweite Spulenscheibe 6b. Die erste Spulenscheibe 6a und die zweite Spulenscheibe 6b sind derart aneinander angebracht, dass jeweils deren inneren Seiten einander gegenüberliegen. Die beiden jeweils an der inneren Seite vorgesehenen Ausnehmungen 22a, 22b weisen somit zueinander bzw. liegen aufeinander, so dass sie einen Kühlkanal 23 zwischen den Spulenscheiben 6a, 6b bilden.

Die erste Spulenscheibe 6a und die zweite Spulenscheibe 6b umfassen jeweils eine Mehrzahl an Wicklungen 13. Diese Wicklungen 13 jeweils einer Spulenscheibe 6a, 6b können dabei unterschiedlich ausgestaltet sein. Eine erste Gruppe von Wicklungen 13a liegt in einer ersten Ebene, so dass sowohl die aktiven Bereiche 16a als auch die passiven Bereiche in der ersten Ebene liegen. Eine zweite Gruppe von Wicklungen 13b ist derart angeordnet, dass die tangentialen Bereiche in einer zweiten Ebene liegen, die von der ersten Ebene versetzt ist, und die aktiven Bereiche 16b in der ersten Ebene liegen. An den Übergängen zu den aktiven Bereichen 16b erfolgt der Ebenenwechsel. Eine dritte Gruppe von Wicklungen 13c ist derart angeordnet, dass die tangentialen Bereiche sowohl in der ersten Ebene als auch in der zweiten Ebene liegen, so dass in den tangentialen Bereichen ein Ebenenwechsel erfolgt. Zusätzlich erfolgt ein Ebenenwechsel vom Teil des tangentialen Bereichs, der in der zweiten Ebene liegt, zum aktiven Bereich 16c, der in der ersten Ebene liegt. Auf diese Weise liegen alle aktiven Bereiche 16a, 16b und 16c jeweils einer der Spulenscheibe 6a, 6b in einer ersten Ebene.

Fig. 12B zeig eine Draufsicht auf das Spulenmodul 18. Die Wicklungen weisen wie hierin offenbart aktive Bereiche 16 und passive Bereiche 17a, 17b auf. Es ist gut sichtbar, dass die aktiven Bereiche 16 der Wicklungen 13 die hierin beschriebene aufgefächerte Form aufweisen.

Ferner sind die in Fig. 12A gezeigten Wicklungen 13a, 13b und 13c eingezeichnet. Es ist gut sichtbar, dass deren benachbarte aktive Bereiche 16a, 16b, 16 im Wesentlichen aneinander angrenzen, so dass vorzugsweise kein Spalt vorliegt.

Fig. 12C zeigt eine perspektivische Ansicht des Spulenmoduls 18, bei der einige der Wicklungen weggelassen wurden, so dass der Kanal 23 zwischen der ersten Spulenscheibe 6a und der zweiten Spulenscheibe 6b gut sichtbar ist. Das heißt zwischen den Wicklungen 13d der ersten Spulenscheibe 6a und den Wicklungen 13e der zweiten Spulenscheibe wird ein Raum gebildet, der von radial innen nach radial außen in seiner axialen Höhe (bzw. Dicke in axialer Richtung) zunimmt.

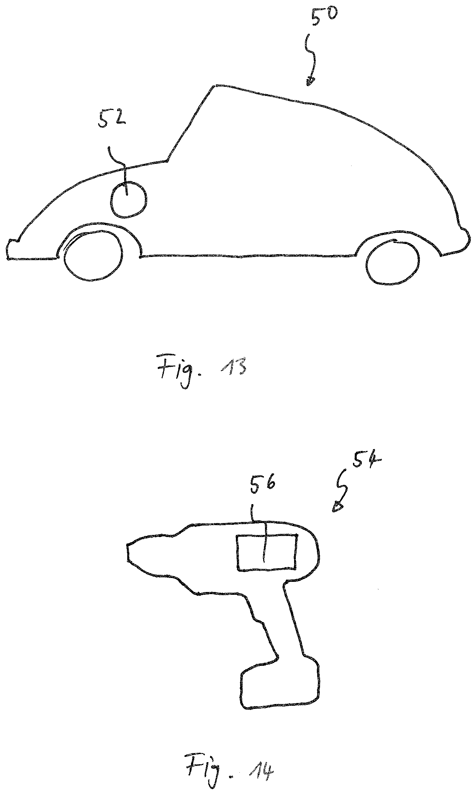

Fig. 13 zeigt ein Fahrzeug 50 mit einer im Rahmen dieser Schrift offenbarten elektrischen Maschine 52.

Fig. 14 zeigt eine Werkzeugmaschine 54 mit einer im Rahmen dieser Schrift offenbarten elektrischen Maschine 56.

Lediglich in den Ausführungsbeispielen offenbarte Merkmale der verschiedenen Ausführungsformen können miteinander kombiniert und einzeln beansprucht werden.

## Patentansprüche

1. Spulenmodul (18) für eine elektrische Maschine aufweisend:
eine erste Spulenscheibe (6) mit mindestens einer Wicklung (13) aus einem elektrisch leitenden Werkstoff;
eine zweite Spulenscheibe (6) mit mindestens einer Wicklung (13) aus einem elektrisch leitenden Werkstoff;
**dadurch gekennzeichnet, dass**
die erste Spulenscheibe (6) und/oder die zweite Spulenscheibe (6) eine im Wesentlichen ringförmige Ausnehmung (22) aufweisen/aufweist;
und
die erste Spulenscheibe (6) und die zweite Spulenscheibe (6) derart aneinander angebracht sind, dass zwischen der ersten Spulenscheibe (6) und der zweiten Spulenscheibe (6) durch die im Wesentlichen ringförmige Ausnehmungen/Ausnehmung (22) ein im Wesentlichen ringförmiger Kühlkanal (23) für ein Kühlmittel gebildet wird.

2. Spulenmodul (18) nach Anspruch 1, wobei die erste Spulenscheibe (6) und/oder die zweite Spulenscheibe (6) im Bereich der Ausnehmung (22) eine Einlassöffnung (43) aufweist, um Kühlmittel in den im Wesentlichen ringförmigen Kühlkanal (23) zu leiten; und/oder
wobei die erste Spulenscheibe (6) und/oder die zweite Spulenscheibe (6) im Bereich der Ausnehmung (22) eine Auslassöffnung (45) aufweist, um Kühlmittel von dem im Wesentlichen ringförmigen Kühlkanal (23) nach außen zu leiten.

3. Spulenmodul (18) nach Anspruch 2, wobei die erste Spulenscheibe (6) und/oder die zweite Spulenscheibe (6) in der Ausnehmung (22) zwischen der Einlassöffnung (43) und der Auslassöffnung (45) einen Steg (38a, 38b) aufweist, der derart ausgebildet ist, dass der im Wesentlichen ringförmige Kühlkanal (23) zwischen der Einlassöffnung (43) und der Auslassöffnung (45) eine Trennwand aufweist.

4. Spulenmodul (18) nach einem der vorangehenden Ansprüche, wobei die erste Spulenscheibe (6) und die zweite Spulenscheibe (6) jeweils aufweisen:
mindestens einen Spulenträger (15) aus einem elektrisch isolierenden Werkstoff und
eine Vielzahl von einzelnen Wicklungen (13) aus einem elektrisch leitfähigen Werkstoff, die um einen Mittelpunkt (14) der mindestens einen Spulenscheibe (6) umlaufend auf der mindestens einen Spulenscheibe (6) angeordnet sind, wobei
jede der Wicklungen (13) zwei von dem Mittelpunkt (14) ausgehend radial verlaufende aktive Bereiche (16) und zwei tangential an ihrem radial äußeren und inneren Rand verlaufende passive Bereiche (17b) aufweist und
in Draufsicht auf die Spulenscheibe (6) die aktiven Bereiche (16) unterschiedlicher Wicklungen (13) einander nicht überdecken, aber jeder passive Bereich (17a, 17b) einer der Wicklungen (13) jeweils die entsprechenden passiven Bereiche (17a, 17b) der beiden unmittelbar benachbarten Wicklungen (13) teilweise überdeckt, **dadurch gekennzeichnet, dass**
in den aktiven Bereichen (16) die jeweilige Wicklung (13) im Querschnitt eine größere Dicke in axialer Richtung aufweist als in den passiven Bereichen (17a, 17b).

5. Spulenmodul (18) nach Anspruch 4, wobei die Ausnehmungen/Ausnehmung (22) zumindest im Bereich der radial verlaufenden aktiven Bereiche (16) und vorzugsweise auch im Bereich der radial äußeren passiven Bereiche (17b) angeordnet sind/ist.

6. Spulenmodul (18) nach Anspruch 5, wobei die Dicke in axialer Richtung der aktiven Bereiche (16) der jeweiligen Wicklung (13) der ersten und/oder zweiten Spulenscheibe in radialer Richtung nach außen abnimmt; und
wobei die Breite in tangentialer Richtung der aktiven Bereiche (16) der jeweiligen Wicklung (13) der ersten und/oder zweiten Spulenscheibe in radialer Richtung nach außen zunimmt.

7. Spulenmodul (18) nach Anspruch 6, wobei eine Tiefe (34, 34a, 34b) in axialer Richtung der Ausnehmung (22) im Bereich der aktiven Bereiche (16) in radialer Richtung nach außen zunimmt.

8. Spulenmodul (18) nach einem der Ansprüche 4 bis 7, wobei das Verhältnis der Dicke der jeweiligen Wicklung (13) in den passiven Bereichen (17a, 17b) zu der Dicke in den aktiven Bereichen (16) größer oder gleich als 0,3 und kleiner als 1 ist.

9. Spulenmodul (18) nach einem der Ansprüche 4 bis 8, wobei sich bei einem Übergang von einem aktiven Bereich (16) zu einem passiven Bereich (17a, 17b) die Form der Querschnittsfläche der jeweiligen Wicklung (13) ändert.

10. Spulenmodul (18) nach einem der Ansprüche 4 bis 9, **dadurch gekennzeichnet, dass** alle aktiven Bereiche (16) verschiedener Wicklungen (13) in Seitenansicht in einer einzelnen Ebene angeordnet sind.

11. Spulenmodul (18) nach einem der Ansprüche 4 bis 10, **dadurch gekennzeichnet, dass** die Wicklungen aus einer feinen Litze aus mehreren gegeneinander elektrisch isolierten Drähten gebildet sind, die einen Drahtdurchmesser kleiner gleich 0,1 mm aufweisen.

12. Spulenmodul (18) nach einem der Ansprüche 4 bis 11, **dadurch gekennzeichnet, dass** eine Anzahl der Wicklungen (13) einem ganzzahligen Vielfachen von 3 entspricht, so dass die Wicklungen (13) einen Drei-Phasen-Betrieb ermöglichen.

13. Spulenmodul (18) nach einem der Ansprüche 4 bis 12, **dadurch gekennzeichnet, dass** sich ein innerer passiver Bereich (17a) und ein äu-ßerer passiver Bereich (17b) einer der Wicklungen (13) in ihrer Dicke in axialer Richtung unterscheiden;
wobei die Dicke des äußeren passiven Bereichs (17b) einer der Wicklungen (13) vorzugsweise so gewählt ist, dass ein Verhältnis der Dicke dieses Bereichs zu der Dicke der aktiven Bereiche (16) kleiner gleich 0,5 ist.

14. Elektrische Maschine mit einer Lagerung (1, 3) und einer in der Lagerung (1, 3) geführten Welle (2), wobei entlang der Welle (2) mindestens ein Magnetmodul (4) mit mehreren Permanentmagneten (5) und mindestens ein Spulenmodul (18) nach einem der Ansprüche 1 bis 13 konzentrisch angeordnet sind.

15. Fahrzeug (50) oder Werkzeugmaschine (54) mit einer elektrischen Maschine nach Anspruch 14.

## Claims

1. A coil module (18) for an electric machine, comprising:
a first coil disc (6) having at least one winding (13) of an electrically conductive material;
a second coil disc (6) having at least one winding (13) of an electrically conductive material;
**characterized in that** the first coil disc (6) and/or the second coil disc (6) comprise/comprises a substantially annular recess (22); and
the first coil disc (6) and the second coil disc (6) are attached to each other such that a substantially annular cooling channel (23) for a coolant is formed between the first coil disc (6) and the second coil disc (6) by the substantially annular recesses/recess (22).

2. The coil module (18) according to claim 1, wherein the first coil disc (6) and/or the second coil disc (6) comprises an inlet opening (43) in the region of the recess (22) for conducting coolant into the substantially annular cooling channel (23); and/or
wherein the first coil disc (6) and/or the second coil disc (6) comprises an outlet opening (45) in the region of the recess (22) for conducting coolant from the substantially annular cooling channel (23) to the outside.

3. The coil module (18) according to claim 2, wherein the first coil disc (6) and/or the second coil disc (6) comprises a bar and/or rib (38a, 38b) in the recess (22) between the inlet opening (43) and the outlet opening (45), the bar and/or rib (38a, 38b) being configured such that the substantially annular cooling channel (23) comprises a dividing wall between the inlet opening (43) and the outlet opening (45).

4. A coil module (18) according to any one of the preceding claims, wherein the first coil disc (6) and the second coil disc (6) each comprise:
at least one coil carrier (15) made of an electrically insulating material and
a plurality of individual windings (13) made of an electrically conductive material and being circumferentially arranged on the at least one coil disc (6) around a center (14) of the at least one coil disc (6), wherein
each of the windings (13) comprises two active regions (16) extending radially from the center (14) and two passive regions (17b) extending tangentially at its radially outer and inner edges, and,
in a top view of the coil disc (6), the active regions (16) of different windings (13) do not overlap each other, but each passive region (17a, 17b) of one of the windings (13) partially overlaps the corresponding passive regions (17a, 17b) of the two directly adjacent windings (13), **characterized in that**,
in the active regions (16), the respective winding (13) in cross-section has a greater thickness in the axial direction than in the passive regions (17a, 17b).

5. The coil module (18) according to claim 4, wherein the recesses/recess (22) are/is arranged at least in the region of the radially extending active regions (16) and preferably also in the region of the radially outer passive regions (17b).

6. The coil module (18) according to claim 5, wherein the thickness in the axial direction of the active regions (16) of the respective winding (13) of the first and/or second coil disc decreases in the radial direction towards the outside; and
wherein the width in the tangential direction of the active regions (16) of the respective winding (13) of the first and/or second coil disc increases in the radial direction towards the outside.

7. The coil module (18) according to claim 6, wherein a depth (34, 34a, 34b) in the axial direction of the recess (22) increases in the region of the active regions (16) in the radial direction towards the outside.

8. The coil module (18) according to any one of claims 4 to 7, wherein a ratio of the thickness of the respective winding (13) in the passive regions (17a, 17b) to the thickness in the active regions (16) is greater than or equal to 0.3 and less than 1.

9. The coil module (18) according to any one of claims 4 to 8, wherein the shape of the cross-sectional area of the respective winding (13) changes at a transition from an active region (16) to a passive region (17a, 17b).

10. The coil module (18) according to any one of claims 4 to 9, **characterized in that** all active regions (16) of different windings (13) are arranged in a single plane in a side view.

11. The coil module (18) according to any one of claims 4 to 10, **characterized in that** the windings are formed from a fine strand of a plurality of wires being electrically insulated from each other and having a wire diameter of less than or equal to 0.1 mm.

12. The coil module (18) according to any one of claims 4 to 11, **characterized in that** a number of the windings (13) corresponds to an integer multiple of three so that the windings (13) enable a three-phase operation.

13. The coil module (18) according to any one of claims 4 to 12, **characterized in that** an inner passive region (17a) and an outer passive region (17b) of one of the windings (13) differ in thickness in the axial direction;
wherein the thickness of the outer passive region (17b) of one of the windings (13) is preferably selected such that a ratio of the thickness of this region to the thickness of the active regions (16) is less than or equal to 0.5.

14. An electric machine comprising a bearing arrangement (1, 3) and a shaft (2) guided in the bearing arrangement (1, 3), wherein at least one magnet module (4) comprising a plurality of permanent magnets (5) and at least one coil module (18) according to any one of claims 1 to 13 are concentrically arranged along the shaft (2).

15. A vehicle (50) or a machine tool (54) comprising an electric machine according to claim 14.

## Revendications

1. Module de bobine (18) pour une machine électrique, comprenant :
un premier disque de bobinage (6) avec au moins un enroulement (13) composé d'un matériau électriquement conducteur ;
un deuxième disque de bobinage (6) avec au moins un enroulement (13) composé d'un matériau électriquement conducteur ;
**caractérisé en ce que**
le premier disque de bobinage (6) et/ou le deuxième disque de bobinage (6) présente(nt) une évidement (22) sensiblement annulaire ;
et
le premier disque de bobinage (6) et le deuxième disque de bobinage (6) sont fixés l'un à l'autre de telle manière, qu'un canal de réfrigération sensiblement annulaire (23) pour un réfrigérant est formé entre le premier disque de bobinage (6) et le deuxième disque de bobinage (6) par l'/les évidement(s) (22) sensiblement annulaire(s).

2. Module de bobine (18) selon la revendication 1, dans lequel le premier disque de bobinage (6) et/ou le deuxième disque de bobinage (6) présente(nt) une orifice d'admission (43) dans la région de l'évidement (22), afin d'introduction du réfrigérant dans le canal de réfrigération sensiblement annulaire (23) ; et/ou dans lequel le premier disque de bobinage (6) et/ou le deuxième disque de bobinage (6) présente(nt), dans la région de l'évidement (22) une orifice d'évacuation (45) afin de guider le réfrigérant du canal de réfrigération sensiblement annulaire (23) vers l'extérieure.

3. Module de bobine (18) selon la revendication 2, dans lequel le premier disque de bobinage (6) et/ou le deuxième disque de bobinage (6) présente(nt), dans l'évidement (22), entre l'orifice d'admission (43) et l'orifice d'évacuation (45), une entretoise (38a, 38b), qui est conçue de telle manière, que le canal de réfrigération (23) sensiblement annulaire présente une paroi de séparation entre l'orifice d'admission (43) et l'orifice d'évacuation (45).

4. Module de bobine (18) selon l'une quelconque des revendications précédentes, dans lequel le premier disque de bobinage (6) et le deuxième disque de bobinage (6) chacun comprennent :
au moins un support de bobine (15) composé d'un matériau électriquement isolant et
une pluralité d'enroulements (13) individuels composés d'un matériau électriquement conducteur, qui sont disposés en périphérie autour d'un point central (14) de l'au moins un disque de bobinage (6) sur l'au moins un disque de bobinage (6), dans lequel
chacun des enroulements (13) présente deux zones actives (16) s'étendant radialement en partant du point central (14) et deux zones passives (17b) s'étendant de manière tangentielle sur leur bord extérieur radial et leur bord intérieur radial, et
vu d'en haut sur le disque de bobinage (6), les zones actives (16) d'enroulements (13) différents ne se superposent pas les unes les autres, chaque zone passive (17a, 17b) d'un des enroulements (13) toutefois recouvre en partie respectivement les zones passives (17a, 17b) correspondantes des deux enroulements (13) directement adjacents, **caractérisé en ce que** l'enroulement (13) respectif présente, dans les zones actives (16), dans la section transversale une épaisseur plus importante dans la direction axiale que dans les zones passives (17a, 17b).

5. Module de bobine (18) selon la revendication 4, l'/les évidement(s) (22) est/sont au moins disposé(s) dans la région des zones actives (16) s'étendant radialement et de préférence aussi dans la région des zones passives (17b) radialement extérieures.

6. Module de bobine (18) selon la revendication 5, dans lequel l'épaisseur en direction axiale des zones actives (16) de l'enroulement (13) respectif de la première et/ou deuxième disque de bobine se réduit en direction radiale vers l'extérieur, et
dans lequel la largeur en direction tangentielle des zones actives (16) de l'enroulement (13) respectif de la première et/ou deuxième disque de bobine s'augmente en direction radiale vers l'extérieur.

7. Module de bobine (18) selon la revendication 6, dans lequel une profondeur (34, 34a, 34b) en direction axiale de l'évidement (22) s'augmente dans la région des zones actives (16) en direction radiale vers l'extérieur.

8. Module de bobine (18) selon l'une quelconque des revendications 4 à 7, dans lequel le rapport d'épaisseur de l'enroulement respectif (13) dans les zones passives (17a, 17b) à l'épaisseur dans les zones actives (16) est supérieur ou égale à 0,3 et inférieur à 1.

9. Module de bobine (18) selon l'une quelconque des revendications 4 à 8, dans lequel la forme de la surface de section transversale de l'enroulement (13) respectif varie lors d'un passage d'une zone active (16) vers une zone passive (17a, 17b).

10. Module de bobine (18) selon l'une quelconque des revendications 4 à 9, **caractérisé en ce que** toutes les zones actives (16) de différents enroulements (13) sont disposées dans une vue latérale dans un plan unique.

11. Module de bobine (18) selon l'une quelconque des revendications 4 à 10, **caractérisé en ce que** les enroulements sont formés d'un toron fin composé de plusieurs fils métalliques électriquement isolés les uns par rapport aux autres, qui présentent un diamètre de fil métallique inférieur ou égal à 0,1 mm.

12. Module de bobine (18) selon l'une quelconque des revendications 4 à 11, **caractérisé en ce qu'**un nombre d'enroulements (13) correspond à un multiple entier de 3 de sorte que les enroulements (13) permettent un fonctionnement triphasé.

13. Module de bobine (18) selon l'une quelconque des revendications 4 à 12, **caractérisé en ce qu'**une zone passive intérieure (17a) et une zone passive extérieure (17b) d'un des enroulements (13) se distinguent dans leur épaisseur dans la direction axiale,
l'épaisseur de la zone passive extérieure (17b) d'un des enroulements (13) est de préférence choisie de telle sorte qu'un rapport entre l'épaisseur de ladite zone et l'épaisseur des zones actives (16) est inférieur ou égal à 0,5.

14. Machine électrique avec un support (1, 3) et un arbre (2) guidé dans le support (1, 3), dans laquelle au moins un module magnétique (4) avec plusieurs aimants permanents (5) et au moins un module de bobine (18) selon l'une quelconque des revendications 1 à 13 sont disposés de manière concentrique le long de l'arbre (2).

15. Véhicule (50) ou machine-outil (54) avec une machine électrique selon la revendication 14.
